# EUROPÄISCHE PATENTSCHRIFT

(11) **EP 3 762 189 B1**
(45) Veröffentlichungstag und Bekanntmachung des Hinweises auf die Patenterteilung: **04.12.2024**
(21) Anmeldenummer: 19718229.8
(22) Anmeldetag: 07.03.2019
(51) Int. Cl.: B25J 9/16

(54) **ROBOTERSYSTEM ZUR PRÜFUNG EINES LADERAUMS EINES LADEHILFSMITTELS IN EINEM LAGER- UND KOMMISSIONIERSYSTEM UND BETRIEBSVERFAHREN HIERFÜR**
ROBOT SYSTEM FOR TESTING A LOADING SPACE OF A LOADING AID IN A STORAGE AND ORDER-PICKING SYSTEM AND OPERATING METHOD THEREFOR
SYSTÈME-ROBOT DE CONTRÔLE D'UN ESPACE DE CHARGEMENT D'UN OUTIL DE CHARGEMENT DANS UN SYSTÈME D'ENTREPOSAGE ET DE PRÉPARATION DE COMMANDES ET SON PROCÉDÉ DE FONCTIONNEMENT

(30) Priorität: 09.03.2018 AT 502082018
(43) Veröffentlichungstag der Anmeldung: 13.01.2021
(73) Patentinhaber: TGW Logistics Group GmbH, 4614 Marchtrenk (AT)
(72) Erfinder: PRECHTL, Christian, 4840 Vöcklabruck (AT); SCHRÖPF, Harald, 4600 Wels (AT)
(74) Vertreter: Burger, Hannes
(86) Internationale Anmeldenummer: PCT/AT2019/060078
(87) Internationale Veröffentlichungsnummer: WO 2019/169420

(56) Entgegenhaltungen:
- DE-A1- 102015 007 863
- DE-A1- 102015 011 527
- US-A1- 2016 297 611

## Beschreibung

Die Erfindung betrifft ein Verfahren zur Steuerung eines Roboters in einem Lager- und Kommissioniersystem, welcher eine gegenüber der Roboterbasis bewegbare Greifeinheit aufweist, bei dem die Waren mit der Greifeinheit von oder aus einem ersten Warenträger aufgenommen und in oder auf einen zweiten Warenträger abgelegt werden, wobei zumindest einer der Warenträger als Ladehilfsmittel ausgebildet ist. Weiterhin betrifft die Erfindung ein Robotersystem mit einem Roboter mit einer gegenüber einer Roboterbasis bewegbaren Greifeinheit zum Greifen/Aufnehmen von Waren, wobei der Roboter dazu ausgebildet ist, Waren mit der Greifeinheit von oder aus einem ersten Warenträger aufzunehmen und in oder auf einen zweiten Warenträger abzulegen, und wobei zumindest einer der Warenträger als Ladehilfsmittel ausgebildet ist. Schließlich betrifft die Erfindung ein Lager- und Kommissioniersystem zum Kommissionieren von Waren, umfassend einen Lagerbereich zum Lagern von Waren und einen Arbeitsplatz zum Kommissionieren/Umpacken von Waren mit einem Robotersystem der obigen Art.

Ein Verfahren, ein Robotersystem und ein Lager- und Kommissioniersystem der genannten Art sind grundsätzlich bekannt. Beispielsweise offenbaren die DE 10 2015 007 863 A1 und die US 9,868,207 B2 hierzu einen Roboter zum Greifen von Waren in einem Lagersystem. Dabei können Informationen zum Greifen der genannten Waren ermittelt und in Verbindung mit einer Datenbank dazu benutzt werden, eine Greifstrategie festzulegen.

Nachteilig an den bekannten Verfahren ist, dass eine über den Laderaum eines Ladehilfsmittels hinausragende Ware in der Regel nicht erkannt wird und daher in Folge zu Störungen bei der Förderung und Manipulation in dem Lager- und Kommissioniersystem führen kann. Daher werden Ladehilfsmittel üblicherweise nicht zur Gänze ausgenutzt, das heißt häufig nicht ganz bis zu einem Behälterrand beladen und schon gar nicht über den Behälterrand hinaus beladen. Dies wirkt sich dementsprechend nachteilig auf die Leistung des Lager- und Kommissioniersystems aus. Diese werden daher in der Regel größer gebaut als dies eigentlich notwendig wäre.

Eine Aufgabe der Erfindung ist es daher, ein verbessertes Verfahren zur Steuerung eines Roboters in einem Lager- und Kommissioniersystem, ein verbessertes Robotersystem sowie ein verbessertes Lager- und Kommissioniersystem zum Kommissionieren von Waren anzugeben. Insbesondere sollen die oben angegebenen Nachteile überwunden werden, das heißt es sollen Störungen bei der Förderung und Manipulation von Waren in einem Lager- und Kommissioniersystem vermieden werden, und es soll die Leistung des Lager- und Kommissioniersystems gegenüber dem Stand der Technik erhöht werden.

Diese Aufgabe wird durch ein Verfahren der eingangs genannten Art gelöst, bei dem
- im Bereich des zumindest einen Ladehilfsmittels ein Laderaum definiert wird, welcher zur Unterbringung der Waren bestimmt ist,
- der Laderaum und die im Bereich des Laderaums befindlichen Waren mithilfe eines Sensorsystems erfasst werden,
- nach dem Aufnehmen einer Ware durch die Greifeinheit von oder aus dem ersten Warenträger eine Prüfung erfolgt, ob eine Ware über den besagten Laderaum hinausragt, und
   a) die über den Laderaum hinausragende Ware von der Greifeinheit aufgenommen und an anderer Position abgelegt wird, oder
   b) der über den Laderaum ragende Teil der Ware von der Greifeinheit in den Laderaum bewegt wird,
wenn der Ausgang der besagten Prüfung positiv ist.

Die besagte Prüfung wird dabei insbesondere durch eine Steuerung eines Robotersystems durchgeführt, welches den Roboter und das Sensorsystem umfasst.

Weiterhin wird die Aufgabe der Erfindung durch ein Robotersystem der eingangs genannten Art gelöst, das eine Steuerung aufweist, welche dazu eingerichtet ist, nach dem Aufnehmen einer Ware durch die Greifeinheit von oder aus dem ersten Warenträger zu prüfen, ob eine Ware über den genannten Laderaum hinausragt, und den Roboter bei positivem Ausgang der Prüfung anzuweisen,
a) die über den Laderaum hinausragende Ware aufzunehmen und an anderer Position abzulegen, oder
b) den über den Laderaum ragenden Teil der Ware in den Laderaum zu bewegen.

Schließlich wird die Aufgabe der Erfindung auch durch ein (weitestgehend automatisiertes) Lager- und Kommissioniersystem der eingangs genannten Art gelöst, welches ein (vollautomatisiertes) Robotersystem der oben genannten Art umfasst, das insbesondere mit dem Lagerbereich fördertechnisch verbunden ist.

Durch die vorgeschlagenen Maßnahmen wird eine über den Laderaum eines Ladehilfsmittels hinausragende Ware erkannt, wodurch Störungen bei der Förderung und Manipulation in einem Lager- und Kommissioniersystem vermieden werden können. Daher können Ladehilfsmittel zur Gänze ausgenutzt werden, und insbesondere ganz bis zu einem Behälterrand beziehungsweise in definierter Weise sogar darüber hinaus beladen werden. Daher kann die Leistung des Lager- und Kommissioniersystems gegenüber dem Stand der Technik deutlich erhöht werden. Diese benötigen daher auch weniger Bauraum als das bisher der Fall war.

Grundsätzlich ist es von Vorteil, wenn für das Ablegen einer Ware in oder auf den zweiten Warenträger eine Position im Laderaum berechnet wird, bei der die genannte Ware voraussichtlich nicht über den genannten Laderaum hinausragt. Gelingt das Ablegen der Ware nicht in der erwarteten Weise, so wird das Problem wie oben angegeben erkannt und in Folge automatisch behoben. Dabei wird die Ware entweder neu aufgenommen und angehoben (Fall a), oder es wird der über den Laderaum ragende Teil der Ware einfach in den Laderaum zurückgeschoben, zurückgeklappt oder zurückgezogen, ohne die Ware vollständig anzuheben (Fall b). Beim Zurückziehen des über den Laderaum ragenden Teils der Ware wird die Greiffunktion des Greifers genutzt. Das Zurückschieben oder Zurückklappen des über den Laderaum ragenden Teils der Ware kann dagegen mit oder ohne Nutzung der Greiffunktion des Greifers erfolgen. Ein Greifen der Ware ist im Fall b) daher nicht unbedingt erforderlich. Allgemein beschreibt der Fall b) also das Bewegen eines über den Laderaum ragenden Teils der Ware zurück in den Laderaum, ohne die Ware dabei vollständig anzuheben.

Beispielsweise kann das Ladehilfsmittel einen Behälterboden, an diesem aufragende Seitenwände und eine durch die Seitenwände begrenzte Beladeöffnung umfassen, sowie einen durch die Beladeöffnung nach oben hin begrenzten Laderaum. Das heißt, das Ladehilfsmittel wird in diesem Fall maximal bis zum Behälterrand beladen.

Vorteilhaft ist es aber auch, wenn das Ladehilfsmittel einen Behälterboden, an diesem aufragende Seitenwände und eine durch die Seitenwände begrenzte Beladeöffnung umfasst, und der Laderaum nach oben hin über die genannte Beladeöffnung hinausragt. Auf diese Weise kann das Ladehilfsmittel über den Behälterrand hinaus beladen werden. Das heißt, der Laderaum ist größer als das Volumen, das durch den Behälterboden, die Seitenwände und die Beladeöffnung des Ladehilfsmittels eingeschlossen wird. Auf diese Weise wird das Aufnahmevermögen eines Ladehilfsmittels gegenüber dem Stand der Technik gesteigert.

Vorteilhaft ist es weiterhin, wenn der Laderaum seitlich über die Seitenwände des Ladehilfsmittels hinausragt. Das heißt, der Laderaum erstreckt sich nicht nur nach oben hin über den Behälterrand hinaus, sondern auch seitlich darüber hinaus. Dadurch wird die Lagerkapazität eines Ladehilfsmittels gegenüber dem Stand der Technik weiter gesteigert.

Darüber hinaus ist es von Vorteil, wenn sich der Laderaum in dem über die Seitenwände ragenden Abschnitt nach unten hin unter die Ebene der Beladeöffnung erstreckt. Das heißt, Waren können auch über den Behälterrand seitlich nach unten hängen. Dadurch wird die Lagerkapazität eines Ladehilfsmittels gegenüber dem Stand der Technik noch weiter erhöht.

Unter einer "Ware" wird im Rahmen der Erfindung insbesondere ein einzeln handhabbares Objekt beziehungsweise eine einzeln handhabbare Gruppe von Objekten verstanden.

Ein "Warenträger" kann zum Beispiel ein Ladehilfsmittel (etwa ein Karton, ein Tablar oder ein Behälter oder eine Palette) sein oder durch einen Förderer (etwa einen Bandförderer, einen Rollenförderer oder einen Kettenförderer) gebildet sein. Ein "Warenträger" kann aber auch durch eine Transportplattform (etwa auf einem Regalbediengerät oder einem autonomen Transportfahrzeug) gebildet sein. Der erste Warenträger fungiert dabei als "Quelle", der zweite Warenträger als "Ziel". Der zweite Warenträger kann beispielsweise auch durch eine schwenkbare Klappe gebildet sein. In diesem Fall entnimmt der Roboter von oder aus der Quelle eine Ware und legt diese auf der Klappe ab. Danach kann diese Ware beispielsweise durch Betätigen, das heißt Hochschwenken, der Klappe in einen weiteren Behälter abgegeben werden.

Ein "Ladehilfsmittel" kann, wie oben angegeben, durch einen Behälter gebildet sein, etwa durch eine Kiste, durch eine Box oder durch einen Karton. Dabei wird angemerkt, dass ein Tablar in der Regel auch Seitenwände aufweist und daher ebenfalls als flacher Behälter aufgefasst werden kann. Bei einer Palette kann sich der Laderaum zum Beispiel quaderförmig nach oben erstrecken.

In einem "Lager- und Kommissioniersystem" können Waren zum Beispiel an einem Wareneingang angeliefert und übernommen werden und sodann gegebenenfalls umgepackt und in einem Lager eingelagert werden. Die Waren können auch gemäß einem Auftrag kommissioniert werden, das heißt aus dem Lager ausgelagert, zu einem Auftrag zusammengestellt und am Warenausgang zum Abtransport bereitgestellt werden. Die Waren werden zwischen Wareneingang und Warenausgang nicht substantiell verändert, ganz im Gegensatz zu einem Herstellungsprozess. Eine geringe Formänderung ist aber möglich, insbesondere bei nicht starren Körpern wie zum Beispiel Beuteln oder Säcken oder aber auch bei anderen nachgiebigen Verpackungen, etwa aus Karton oder Kunststoff.

Für das Auftreten eines Fehlers, das heißt den negativen Ausgang der Prüfung, ob eine Ware über den Laderaum hinausragt, sind insbesondere die folgenden Szenarien denkbar:
i) Die Ware wird von der Greifeinheit ordnungsgemäß aus dem als Ladehilfsmittel ausgebildeten ersten Warenträger (Quelle) aufgenommen und auch ordnungsgemäß in oder auf den zweiten Warenträger (Ziel) abgelegt. Beim Herausbewegen der Greifeinheit aus dem Ladehilfsmittel wird jedoch eine andere als die von der Greifeinheit aufgenommene Ware mitgenommen oder mitgezogen, die in Folge so unglücklich in das Ladehilfsmittel zurückfällt, dass sie über dessen Laderaum hinausragt.
ii) Die Ware wird von der Greifeinheit aus dem als Ladehilfsmittel ausgebildeten ersten Warenträger (Quelle) aufgenommen, fällt j edoch ungewollt von dieser so unglücklich in das Ladehilfsmittel zurück, dass es über dessen Laderaum hinausragt.
iii) Die Ware wird von der Greifeinheit ordnungsgemäß von oder aus dem ersten Warenträger (Quelle) aufgenommen und in dem als Ladehilfsmittel ausgebildeten zweiten Warenträger (Ziel) abgelegt. Dort ragt es j edoch über den Laderaum hinaus.
iv) Die Ware wird von der Greifeinheit ordnungsgemäß von oder aus dem ersten Warenträger (Quelle) aufgenommen, fällt jedoch ungewollt von dieser so unglücklich in den als Ladehilfsmittel ausgebildeten zweiten Warenträger (Ziel), dass es über dessen Laderaum hinausragt.
v) Die Ware wird von der Greifeinheit ordnungsgemäß von oder aus dem ersten Warenträger (Quelle) aufgenommen, fällt jedoch ungewollt von dieser herunter und bleibt weder auf dem ersten Warenträger noch auf dem zweiten Warenträger (Ziel) liegen.

Generell können die in den Fällen i) bis v) beschriebenen Fehler dadurch behoben werden, dass die Ware entweder neu aufgenommen wird (Fall a) oder indem der über den Laderaum ragende Teil der Ware in den Laderaum zurückgeschoben, zurückgeklappt oder zurückgezogen wird (Fall b).

Im Fall i) sind dabei zudem zwei unterschiedliche Szenarien zur Fehlerbehebung denkbar: In einer ersten Variante wird die über den Laderaum des ersten Warenträgers (Quelle) hinausragende Ware auf jeden Fall vollständig in den Laderaum des ersten Warenträgers (Quelle) zurückbefördert. In einer zweiten Variante wird geprüft, ob die über den Laderaum des ersten Warenträgers (Quelle) hinausragende Ware zur Vervollständigung eines Umladeauftrags beiträgt, welcher das Umladen mehrerer Waren vom ersten Warenträger in den zweiten Warenträger umfasst. Trifft dies zu, so wird die über den Laderaum des ersten Warenträgers (Quelle) hinausragende Ware in den Laderaum des zweiten Warenträgers (Ziel) befördert. Trifft dies nicht zu, so wird die über den Laderaum des ersten Warenträgers (Quelle) hinausragende Ware auf jeden Fall vollständig in den Laderaum des ersten Warenträgers (Quelle) zurückbefördert.

Im Fall v) ist es zudem von Vorteil, wenn zusätzlich geprüft wird, ob sich eine von der Greifeinheit heruntergefallene Ware vollständig außerhalb des Laderaums befindet.

Insbesondere ist es von Vorteil, wenn geprüft wird, ob die von der Greifeinheit heruntergefallene Ware auf den Fußboden gefallen ist. In beiden Fällen wäre denkbar, dass der aufgetretene Fehler nicht durch das Robotersystem selbst behoben werden kann und daher eine Alarmmeldung ausgegeben wird. In Folge kann das Problem gegebenenfalls durch eine Bedienperson gelöst werden.

In obigem Zusammenhang ist es aber auch von Vorteil, wenn
- geprüft wird, ob sich die von der Greifeinheit heruntergefallene Ware auf einer Ablagefläche befindet, welche benachbart zum ersten Warenträger und/oder zum zweiten Warenträger angeordnet ist, und
- die auf der Ablagefläche befindliche Ware von der Greifeinheit aufgenommen und
   i) in oder auf den ersten Warenträger, oder
   ii) in oder auf den zweiten Warenträger, oder
   iii) auf einem Klärplatz
   abgelegt wird.

Auf diese Weise kann das aufgetretene Problem durch das Robotersystem selbst behoben werden, wodurch eine Intervention durch eine Bedienperson überflüssig ist. Die Ablagefläche kann durch eine horizontal oder schräg ausgerichtete Ebene, sowie durch eine schwenkbare Klappe gebildet sein und kann zwischen den Warenträgern angeordnet sein aber auch rund um die Warenträger. Die Klappe kann insbesondere motorisch angetrieben sein oder vom Roboter betätigt werden. Mithilfe einer Ablagefläche, welche in Form einer schräg ausgerichteten Ebene ausgeführt ist, kann eine von der Greifeinheit heruntergefallene Ware automatisch in oder auf den ersten Warenträger, in oder auf den zweiten Warenträger oder auf einen Klärplatz befördert werden. Mithilfe einer Klappe kann eine von der Greifeinheit heruntergefallene Ware wahlweise in oder auf den ersten Warenträger, in oder auf den zweiten Warenträger oder auf einen Klärplatz befördert werden.

Wie oben ausgeführt, kann vorgesehen sein, dass in bestimmten Fällen eine Alarmmeldung ausgegeben wird. Von Vorteil ist es daher generell, wenn die Prüfung, ob eine Ware über den Laderaum hinausragt sowie die Schritte a) oder b) rekursiv wiederholt werden und die rekursive Wiederholung dieses Ablaufs nach einer vorgegebenen Anzahl an Wiederholungen abgebrochen und eine Alarmmeldung ausgegeben wird. Dementsprechend wird bei Problemen, die vom Robotersystem alleine nicht gelöst werden können, eine Alarmmeldung ausgegeben, um das Bedienpersonal auf das aufgetretene Problem aufmerksam zu machen.

Von Vorteil ist es aber auch, wenn die Prüfung, ob eine Ware über den Laderaum hinausragt, sowie die Schritte a) oder b) rekursiv wiederholt werden, bis der Ausgang der genannten Prüfung negativ ist. Bei dieser Variante des vorgeschlagenen Verfahrens wird davon ausgegangen, dass alle potenziell bei der Umladung der Waren auftretenden Probleme vom Robotersystem alleine gelöst werden können. Dies kann insbesondere dann gewährleistet werden, wenn der Arbeitsplatz für den Roboter so gestaltet ist, dass sich auch von der Greifeinheit heruntergefallene Waren stets im Wirkungsbereich des Roboters befinden. Beispielsweise kann dies dadurch erreicht werden, dass die Greifeinheit auch den Fußboden und damit auf den Fußboden gefallene Waren erreichen kann oder auch dadurch, dass entsprechende Ablageflächen rund um den ersten Warenträger und den zweiten Warenträger vorgesehen werden.

Besonders vorteilhaft ist es, wenn
- das Greifen/Aufnehmen einer Ware von oder aus dem ersten Warenträger und eine Erfassung des zweiten Warenträgers und der in oder auf dem zweiten Warenträger befindlichen Waren mit Hilfe des Sensorsystems, und
- das Ablegen einer Ware in oder auf den zweiten Warenträger und eine Erfassung des ersten Warenträgers beziehungsweise der in oder auf dem ersten Warenträger befindlichen Waren mit Hilfe des Sensorsystems
im Wechsel erfolgt, wobei sich die Vorgänge insbesondere zeitlich überschneiden.

Mit anderen Worten bedeutet dies, dass das Aufnehmen einer Ware und die Prüfung, ob eine Ware über einen Laderaum hinausragt, an zwei verschiedenen Orten, nämlich am ersten Warenträger und am zweiten Warenträger im Wechsel erfolgt. Dadurch wird insbesondere bei der optischen Erfassung des ersten und zweiten Warenträgers vermieden, dass die Greifeinheit den zu prüfenden Warenträger verdeckt und damit eine Prüfung vereitelt. Darüber hinaus wird das Verfahren durch die Parallelisierung der ablaufenden Prozesse insgesamt beschleunigt.

Vorteilhaft ist es auch, wenn die Prüfung, ob eine Ware über den Laderaum hinausragt nach dem Aufnehmen einer anderen Ware von oder aus dem ersten Warenträger erfolgt. Diese Variante betrifft im besonderen zwei Fälle, nämlich wenn eine andere als die aufgenommene Ware in oder auf den als Ladehilfsmittel ausgebildeten ersten Warenträger zurückfällt oder wenn die Greifeinheit eine Ware in oder auf den als Ladehilfsmittel ausgebildeten zweiten Warenträger abgelegt hat, jedoch eine optische Erfassung des zweiten Warenträgers und der darin lagernden Waren verhindert. Im ersten Fall wird eine andere als die aufgenommene Ware unbeabsichtigt mitgezogen und kann in Folge über den Laderaum des ersten Warenträgers hinausragen. Im zweiten Fall kann eine Erfassung (insbesondere eine optische Erfassung) des zweiten Warenträgers und der darin lagernden Waren erst dann erfolgen, wenn der Greifeinheit aus dem Bereich des zweiten Warenträgers heraus bewegt wird.

Generell kann die Prüfung, ob eine Ware über einen Laderaum hinausragt, während der Bewegung der Greifeinheit vom ersten Warenträger zum zweiten Warenträger erfolgen und umgekehrt, sodass durch die Prüfung keine merklichen Wartezeiten entstehen. Die Ladehilfsmittel können somit auch unmittelbar nach dem Umpack- oder Kommissioniervorgang durch eine Fördertechnik abtransportiert werden.

Günstig ist es, wenn der erste Warenträger als erstes Ladehilfsmittel und der zweite Warenträger als zweites Ladehilfsmittel ausgebildet sind, wobei
- im Bereich des ersten Ladehilfsmittels ein Laderaum definiert wird, welcher zur Unterbringung von Waren bestimmt ist, und im Bereich des zweiten Ladehilfsmittels ein weiterer Laderaum definiert wird, welcher zur Unterbringung von Waren bestimmt ist,
- die Laderäume und die im Bereich der Laderäume befindlichen Waren des ersten Ladehilfsmittels und des zweiten Ladehilfsmittels jeweils mithilfe des Sensorsystems erfasst werden,
- nach dem Aufnehmen einer Ware durch die Greifeinheit von oder aus dem ersten Ladehilfsmittel und nach dem Ablegen der Ware durch die Greifeinheit in oder auf das zweite Ladehilfsmittel jeweils eine Prüfung erfolgt, ob eine Ware über einen der Laderäume hinausragt, und
   a) die über den besagten Laderaum hinausragende Ware von der Greifeinheit aufgenommen und an anderer Position abgelegt wird, oder
   b) der über den besagten Laderaum ragende Teil der Ware von der Greifeinheit in diesen Laderaum bewegt wird,
wenn der Ausgang der besagten Prüfung positiv ist.

Bei dieser Ausführungsvariante sind beide Warenträger als Ladehilfsmittel ausgebildet. Das erste Ladehilfsmittel weist demzufolge einen ersten Laderaum auf, und das zweite Ladehilfsmittel einen zweiten Laderaum.

Günstig ist es, wenn die Prüfung, ob eine Ware über den Laderaum hinausragt, nach dem vollständigen Herausbewegen der Greifeinheit und/oder der von der Greifeinheit aufgenommenen Ware aus dem Laderaum erfolgt. Erfolgt die besagte Prüfung nach dem Aufnehmen der Ware, sollte die Greifeinheit und die damit gehaltene Ware demnach vor der Prüfung vollständig aus dem Laderaum heraus bewegt worden sein. Erfolgt die besagte Prüfung nach dem Ablegen der Ware, braucht nur die Greifeinheit (die ja keine Ware mehr hält) vor der Prüfung vollständig aus dem Laderaum heraus bewegt worden sein. Durch diese Maßnahmen wird sichergestellt, dass sich im Laderaum ein statischer Zustand einstellt, der nicht durch den Umladevorgang der Waren gestört wird. Dementsprechend wird dadurch auch sichergestellt, dass die Prüfung, ob eine Ware über den Laderaum hinausragt, valide ist.

Vorteilhaft ist es weiterhin, wenn die Prüfung, ob eine Ware über den Laderaum hinausragt, nach dem vollständigen Herausbewegen der Greifeinheit und/oder der von der Greifeinheit aufgenommenen Ware aus einem Erfassungsbereich des Sensorsystems erfolgt, insbesondere aus einem Erfassungsbereich, welcher den Laderaum eines Warenträgers und der darin enthaltenen Waren betrifft. Denkbar wäre, dass die Greifeinheit und/oder die von der Greifeinheit aufgenommene Ware aus dem Laderaum nach dem vollständigen Herausbewegen aus dem Laderaum Teile des Warenträgers und der (anderen) darin enthaltenen Waren verdeckt, sodass eine Prüfung, ob eine Ware über den Laderaum hinausragt, nur für einen Teil des vom Sensorsystems erfassten Bereichs möglich ist. Durch die vorgeschlagenen Maßnahmen ist jedoch eine vollständige Prüfung möglich.

Besonders vorteilhaft ist es zudem, wenn die Prüfung, ob eine Ware über den Laderaum hinausragt, nach dem vollständigen seitlichen Wegbewegen der Greifeinheit und der von der Greifeinheit aufgenommenen Ware von einem Warenträger erfolgt. Solange sich die Greifeinheit und die von der Greifeinheit aufgenommene Ware vertikal über einem Warenträger befindet, kann nicht ausgeschlossen werden, dass die Ware unbeabsichtigt in oder auf den Warenträger zurückfällt. Durch die vorgeschlagenen Maßnahmen ist jedoch eine valide Prüfung möglich.

Günstig ist es, wenn die Prüfung, ob eine Ware über den genannten Laderaum hinausragt, nach jedem Aufnehmen einer Ware durchgeführt wird. Dadurch kann eine über den Laderaum ragende Ware zeitnah zum Auftreten des Fehlers detektiert werden, und es wird vermieden, dass sich die Auswirkungen mehrerer hintereinander auftretender Fehler akkumulieren. Insbesondere betreffen die genannten Maßnahmen den ersten Warenträger (Quelle).

In ähnlicher Weise ist es günstig, wenn die Prüfung, ob eine Ware über den genannten Laderaum hinausragt, nach jedem Ablegen einer Ware in oder auf den zweiten Warenträger durchgeführt wird. Dadurch kann eine über den Laderaum ragende Ware ebenfalls zeitnah zum Auftreten des Fehlers detektiert werden, und es wird wiederum vermieden, dass sich die Auswirkungen mehrerer hintereinander auftretender Fehler akkumulieren. Insbesondere betreffen diese Maßnahmen den zweiten Warenträger (Ziel).

Vorteilhaft ist es aber auch, wenn die Prüfung, ob eine Ware über den genannten Laderaum hinausragt, nach dem Ablegen einer Vielzahl von Waren (insbesondere nach dem Ablegen aller einem Auftrag zugeordneter Waren) in oder auf den zweiten Warenträger durchgeführt wird. Dadurch kann die Anzahl der Prüfungen und damit der Rechenaufwand und die Rechenzeit für die Bearbeitung derselben reduziert werden. Diese Variante eignet sich daher insbesondere für Robotersysteme mit begrenzter Rechenleistung.

An dieser Stelle wird angemerkt, dass eine Prüfung nach dem Aufnehmen der Ware (aber vor dem Ablegen derselben) und eine weitere Prüfung nach dem Ablegen der Ware erfolgen kann. Denkbar ist aber auch, dass nur eine Prüfung nach dem Ablegen der Ware und damit zeitlich hinter dem Aufnehmen der Ware erfolgt. Das heißt, der Zeitpunkt für die nach dem Aufnehmen vorgesehene Prüfung verschiebt sich dann zeitlich nach hinten, konkret auf einen Zeitpunkt nach dem Ablegen der Ware.

Vorteilhaft ist es, wenn ein Belegtstatus der Greifeinheit nach dem Aufnehmen einer Ware überwacht wird und die Prüfung, ob eine Ware über den Laderaum hinausragt, bei Erkennen einer unbelegten jedoch aktivierten Greifeinheit durchgeführt wird. Dadurch wird das ungewollte Herunterfallen einer Ware von der Greifeinheit erkannt und infolge die Prüfung, ob eine Ware über den Laderaum hinausragt, eingeleitet. Das ungewollte Herunterfallen ist eben dadurch gekennzeichnet, dass die Greifeinheit unbelegt, jedoch aktiviert ist. Ist die Greifeinheit belegt und aktiviert, dann wird eine Ware durch die Greifeinheit gehalten. Ist die Greifeinheit unbelegt und deaktiviert, dann wurde eine Ware gewollt beziehungsweise willentlich abgelegt oder fallen gelassen. Die Überwachung des Belegtstatus der Greifeinheit kann zum Beispiel durch eine speziell dafür ausgelegte Sensorik auf der Greifeinheit erfolgen. Die Überwachung des Belegtstatus der Greifeinheit kann aber auch durch das Sensorsystem erfolgen, welche zur Erfassung des Laderaums und der im Bereich des Laderaums befindlichen Waren vorgesehen ist. Beispielsweise kann das Sensorsystem dazu eine Waage aufweisen, welche unter einem Warenträger positioniert ist und das Gewicht des Warenträgers samt der darin befindlichen Waren messen kann. Wird eine Ware entnommen, so wird das von der Waage gemessene Gewicht kleiner. Fällt die Ware von der Greifeinheit zurück auf den Warenträger, von oder aus dem die Ware entnommen wurde, dann erhöht sich das von der Waage gemessene Gewicht. Entsprechend kann darauf geschlossen werden, dass die Ware (unbeabsichtigt) von der Greifeinheit gefallen ist. In äquivalenter Weise kann festgestellt werden, ob eine Ware unbeabsichtigt auf oder in den zweiten Warenträger (Ziel) gefallen ist. Weitere Hinweise zum Einsatz einer Waage in dem genannten Zusammenhang finden sich in der Internationalen Patentanmeldung PCT/AT2018/060012.

Günstig ist es weiterhin, wenn die Waren gemäß einem Auftrag
- mit Hilfe des ersten Warenträgers zum Roboter transportiert werden,
- mit Hilfe des Roboters von oder aus dem ersten Warenträger in oder auf den zweiten Warenträger umgeladen werden, und
- mit Hilfe des zweiten Warenträgers vom Roboter weg transportiert werden.

Bei dieser Variante werden die Waren zum Roboter transportiert, beispielsweise direkt auf einem Bandförderer, einem Rollenförderer oder einem Kettenförderer, beziehungsweise mit einem Ladehilfsmittel auf einem Bandförderer, einem Rollenförderer oder einem Kettenförderer. Der Roboter kann daher statisch an einem Ort verbleiben. Grundsätzlich wäre es aber auch vorstellbar, dass der Roboter als mobiler Roboter ausgebildet ist. Beispielsweise kann der Roboter auf einem autonomen Transportfahrzeug (engl.: Automated Guided Vehicle, kurz "AGV") aufgebaut sein.

Günstig ist es, wenn das Sensorsystem eine Kamera und/oder einen Raumtiefensensor und/oder einen Laserscanner und/oder einen Ultraschallsensor umfasst. Mithilfe dieser Sensoren kann festgestellt werden, ob eine Ware über den Laderaum des Ladehilfsmittels hinausragt. Darüber hinaus kann mit dem Sensorsystem auch die Lage und Position einer Ware in oder auf einem Warenträger ermittelt und für das Greifen durch die Greifeinheit herangezogen werden. Mit einer Kamera (Stereokamera), einem Raumtiefensensor, einem Laserscanner oder einem Ultraschallsensor kann ein dreidimensionales Abbild der in oder auf dem Warenträger liegenden Waren erfasst werden. Ein dreidimensionales Abbild kann jedoch auch aus mehreren, aus verschiedenen Blickwinkeln aufgenommenen, zweidimensionalen Abbildern generiert werden. Diese zweidimensionalen Abbilder können beispielsweise von stereometrisch angeordneten Kameras stammen oder aber auch während einer Relativbewegung zwischen Ware und Kamera aufgenommen werden. Dabei kann sich die (einzige) Kamera gegenüber der unbewegten Ware bewegen oder umgekehrt. Durch die dreidimensionale Erfassung der in oder auf dem Warenträger liegenden Waren kann auch eine Oberflächenstruktur der Waren ermittelt und die Eignung für das Greifen durch die Greifeinheit festgestellt werden. Beispielsweise eignen sich stark konvexe Oberflächen weniger für das Greifen durch einen Sauggreifer, wohingegen ebene Flächen besonders gut für das Greifen durch einen Sauggreifer geeignet sind. Eine Kamera eignet sich insbesondere auch dazu, eine Oberflächenbeschaffenheit der aufzunehmenden Ware, beispielsweise einen Aufdruck auf einer Verpackung, zu erfassen.

Vorteilhaft umfasst die Greifeinheit zumindest einen Sauggreifer. Sauggreifer eignen sich zum schnellen Aufnehmen von Waren unterschiedlicher Beschaffenheit, beispielsweise sowohl zum Manipulieren von mehr oder minder starren Körpern (zum Beispiel Schachteln, Kartons und Kunststoffboxen) als auch zum Manipulieren von nachgiebigen und insbesondere biegeschlaffen Körpern (zum Beispiel mit Objekten gefüllte Säcke oder Beutel).

An dieser Stelle wird angemerkt, dass sich das vorgestellte Verfahren beziehungsweise der vorgestellte Roboter generell (das heißt nicht nur im Zusammenhang mit Sauggreifern) sowohl für die Aufnahme von starren Waren eignet, als auch für verformbare Waren, wie zum Beispiel für Säcke oder Beutel. Sowohl starre Waren als auch verformbare Waren können durch ein einzeln handhabbares Objekt gebildet sein beziehungsweise durch eine einzeln handhabbare Gruppe von Objekten. Konkret kann eine Ware daher beispielsweise als Karton oder Kunststoffbox ausgebildet sein, der/die mit mehreren Objekten gefüllt ist. Gleichermaßen kann eine Ware auch als Sack oder Beutel ausgebildet sein, der mit mehreren Objekten gefüllt ist. Besonders gut eignet sich das erfindungsgemäße Verfahren beziehungsweise Robotersystem für Waren in Form von Folienbeuteln, insbesondere in Form von sogenannten "Polybags" beziehungsweise "Polybeuteln" aus Polyethylen oder Polypropanol. Solche Folienbeutel werden vorwiegend in der Textilindustrie verwendet und beispielsweise zur Verpackung von T-Shirts, Hemden und dergleichen eingesetzt. Häufig werden solche Folienbeutel auch in der Schuhindustrie oder Lebensmittelindustrie verwendet.

Günstig ist es zudem, wenn der Roboter als Gelenkarmroboter oder Portalroboter ausgebildet ist. Diese Bauformen stellen bewährte und erprobte Mittel zum Manipulieren von Waren dar und sind am Markt in vielfältiger Art verfügbar.

Schließlich ist es von Vorteil, wenn der Arbeitsplatz des Lager- und Kommissioniersystems zum vollautomatisierten Kommissionieren von Waren ausgebildet ist, und eine erste Fördertechnik zum Transport von Waren in oder auf ersten Warenträgern (Lagerladehilfsmittel, insbesondere Behälter) zwischen dem Lagerbereich und dem Roboter am Arbeitsplatz angeordnet ist, und/oder eine zweite Fördertechnik zum Abtransport von Waren in oder auf zweiten Warenträgern (Auftragsladehilfsmittel, insbesondere Karton) zwischen dem Lagerbereich und dem Roboter am Arbeitsplatz vorgesehen ist, wobei der Roboter dazu ausgebildet ist, zumindest eine Ware von oder aus dem ersten Warenträger (Lagerladehilfsmittel, insbesondere Behälter) zu einem Auftrag aufzunehmen und die zumindest eine Ware in oder auf den zweiten Warenträger (Auftragsladehilfsmittel, insbesondere Karton) zu diesem Auftrag abzulegen. Auf diese Weise kann ein Kommissioniervorgang besonders effizient und schnell ausgeführt werden.

An dieser Stelle wird angemerkt, dass sich die zum Verfahren offenbarten Ausführungsvarianten und daraus resultierenden Vorteile gleichermaßen auf die offenbarte Vorrichtung beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: ein vereinfacht dargestelltes erstes Beispiel für ein Robotersystem mit einem Roboter und einem fix installierten Kamerasystem in Schrägansicht;
- Fig. 2: ähnlich wie Figur 1, jedoch mit einem beweglichen Kamerasystem mit einer Kamera, die an einem Roboterarm-Segment des Roboters befestigt ist;
- Fig. 3: ein schematisch dargestelltes Beispiel für ein Lager- und Kommissioniersystem in Draufsicht;
- Fig. 4: einen Behälter mit einem Laderaum, der nach oben hin durch eine Beladeöffnung des Behälters begrenzt ist;
- Fig. 5: einen Behälter mit einem Laderaum, der nach oben hin über die Beladeöffnung hinausragt;
- Fig. 6: einen Behälter mit einem Laderaum, der seitlich über die Seitenwände des Behälters hinausragt;
- Fig. 7: einen Behälter mit einem Laderaum, der sich in dem über die Seitenwände ragenden Abschnitt nach unten hin unter die Ebene der Beladeöffnung erstreckt;
- Fig. 8: einen Behälter mit einem Laderaum gemäß Fig. 5 und darin lagernden, quaderförmigen Waren;
- Fig. 9: einen Behälter mit einem Laderaum gemäß Fig. 6 und darin lagernden, quaderförmigen Waren;
- Fig. 10: einen Behälter mit einem Laderaum gemäß Fig. 4 und darin lagernden, quaderförmigen Waren;
- Fig. 11: einen Behälter mit einem Laderaum gemäß Fig. 4 mit einer über den Behälterrand hängenden, biegeschlaffen Ware;
- Fig. 12: einen Behälter mit einem Laderaum gemäß Fig. 4 und darin lagernden, biegeschlaffen Waren;
- Fig. 13: eine Anordnung mit zwei Behältern sowie einer Ablagefläche im Bereich dieser Behälter, auf der eine Ware liegt;
- Fig. 14: die Anordnung aus Fig. 13, jedoch in einem Zustand, in dem die Ware von der Ablagefläche entfernt wurde;
- Fig. 15: eine Anordnung mit vier Behältern sowie einer Ablagefläche im Bereich dieser Behälter, auf der eine Ware liegt;
- Fig. 16: die Anordnung aus Fig. 15, jedoch in einem Zustand, in dem die Ware von der Ablagefläche entfernt wurde;
- Fig. 17: ein Beispiel für eine zwischen einem ersten und zweiten Behälter angeordnete schwenkbare Klappe.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

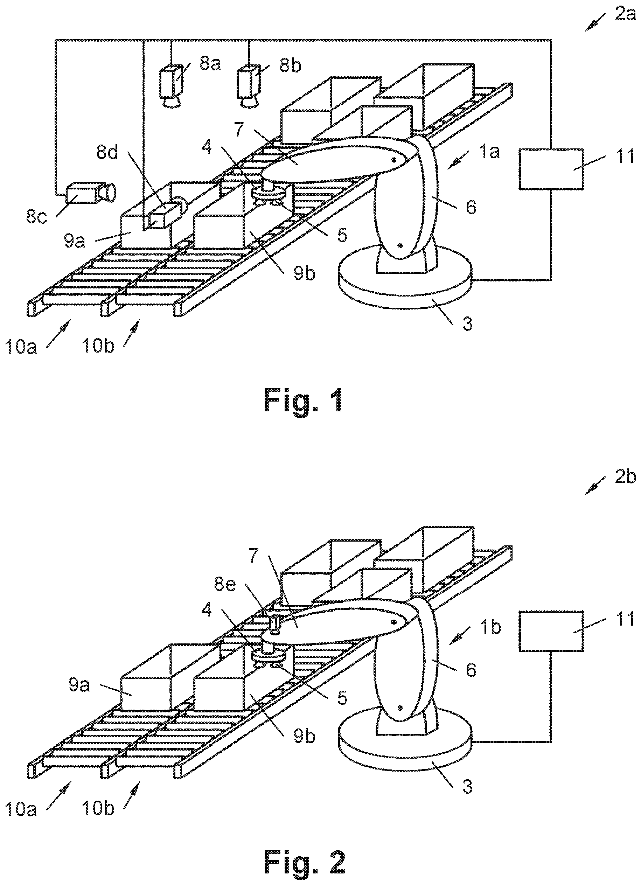

Die Figur 1 zeigt einen Roboter 1a in einem Robotersystem 2a. Der Roboter 1a weist eine gegenüber einer Roboterbasis 3 bewegbare Greifeinheit 4 auf, welche in diesem Beispiel drei voneinander beabstandete Sauggreifer 5 aufweist. Die Greifeinheit 4 ist über einen Roboterarm, welcher zwei Armsegmente 6 und 7 aufweist, mit der Roboterbasis 3 gelenkig verbunden. Weiterhin zeigt die Figur 1 ein Sensorsystem 8a..8d, welches der Erfassung der Warenträger 9a und 9b sowie der darin lagernden Waren dient und in diesem Beispiel zwei Kameras 8a, 8b und zwei weitere optionale Kameras 8c, 8d umfasst. Die Waren sind in der Figur 1 jedoch nicht sichtbar, da sie in den Warenträgern 9a und 9b lagern, die in diesem Beispiel als Behälter ausgeführt sind. Der Behälter 9a ist ein Quellbehälter, aus welchem Waren von der Greifeinheit 4 aufgenommen / entnommen werden, und der Behälter 9b ist ein Zielbehälter, in welchen Waren von der Greifeinheit 4 abgelegt / abgeworfen werden.

Die Kameras 8a, 8b sind in diesem Beispiel über den Behältern 9a und 9b angeordnet und jeweils als Stereokamera ausgebildet. Demnach erfassen die Kameras 8a, 8b ein dreidimensionales Abbild vom Inneren zumindest der Behälter 9a und 9b und der darin lagernden Waren. Grundsätzlich könnte auch bloß die Kamera 8a (Stereokamera) oberhalb des Behälters 9a oder bloß die Kamera 8b (Stereokamera) oberhalb des Behälters 9b vorgesehen werden. Denkbar ist weiterhin, dass für die Behälter 9a und 9b lediglich eine gemeinsame Kamera 8a (Stereokamera) vorgesehen ist. Auch wenn in einer bevorzugten Ausführung Stereokameras verwendet werden, könnten die Kameras 8a, 8b auch als Kamera zur Erfassung eines zweidimensionalen Abbilds vom Inneren zumindest der Behälter 9a und 9b und den darin lagernden Waren ausgebildet sein.

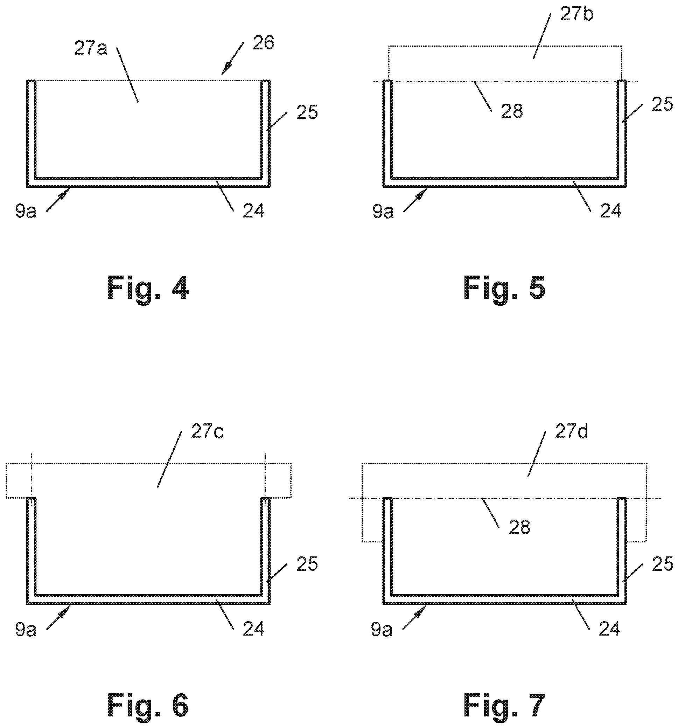

Mit den beiden optionalen Kameras 8c, 8d können die Behälter 9a und 9b sowie die darüber hinaus ragenden Waren auch von der Seite erfasst werden. Der spezielle Zweck der optionalen Kameras 8c, 8d wird anhand der Figuren 6 und 7 im Detail erläutert. Die in der Figur 1 dargestellte Position und Ausrichtung der beiden optionalen Kameras 8c, 8d ist rein illustrativ zu sehen, und es sind auch andere Positionen und Ausrichtungen für die beiden optionalen Kameras 8c, 8d vorstellbar.

Die in der Figur 1 gezeigte Anordnung umfasst weiterhin eine Fördertechnik zum Antransport der Behälter 9a, 9b zum Robotersystem 2a und zum Abtransport der Behälter 9a, 9b vom Robotersystem 2a. Insbesondere umfasst die Fördertechnik eine erste Förderstrecke 10a zum Antransport der Behälter 9a, 9b zum Robotersystem 2a und eine zweite Förderstrecke 10b zum Abtransport der Behälter 9a, 9b vom Robotersystem 2a.

Schließlich umfasst die in der Figur 1 dargestellte Anordnung eine Steuerung 11, welche mit den Kameras 8a..8d und dem Roboter 1a verbunden ist und insbesondere für die Überprüfung dient, ob eine Ware aus einem Laderaum der Behälter 9a und 9b hinausragt. Weiterhin dient die Steuerung 11 dazu, die Bewegung der Greifeinheit 4 entsprechend einem vorgegebenen Umladevorgang anzusteuern.

Die Figur 2 zeigt ein Robotersystem 2b, das dem in der Figur 1 dargestellten Robotersystem 2a sehr ähnlich ist. Im Unterschied dazu sind jedoch keine Kameras 8a..8d oberhalb und seitlich von den Behältern 9a und 9b angeordnet, sondern es ist eine einzige Kamera 8e direkt am zweiten Armsegment 7 des Roboters 1b angeordnet. Diese Kamera 8e ist ebenfalls mit einer Steuerung 11 verbunden (Verbindung nicht dargestellt). Weiterhin kann die Kamera 8e wiederum als Stereokamera ausgeführt sein, um ein dreidimensionales Abbild der Behälter 9a und 9b sowie der darin gelagerten Waren zu erfassen, beispielsweise indem die Kamera 8e mithilfe des Roboters 1a über den Behälter 9a oder über den Behälter 9b bewegt und dort ein Bild erfasst wird. Denkbar wäre aber auch, dass die Kamera 8e lediglich zur Erfassung eines zweidimensionalen Abbilds ausgebildet ist, und ein dreidimensionales Abbild der Behälter 9a und 9b sowie der darin gelagerten Waren durch Erfassen mehrerer zweidimensionaler Abbilder während einer Bewegung der Kamera 8e und anschließender Berechnung des dreidimensionalen Abbilds generiert wird. Darüber hinaus kann die Kamera 8e auch so positioniert werden, dass die Behälter 9a, 9b sowie die darüber hinaus ragenden Waren auch von der Seite erfasst werden können. An dieser Stelle wird auch angemerkt, dass die Kamera 8e auch mit den Kameras 8a..8d aus dem Robotersystem 1a der Fig. 1 kombiniert werden kann.

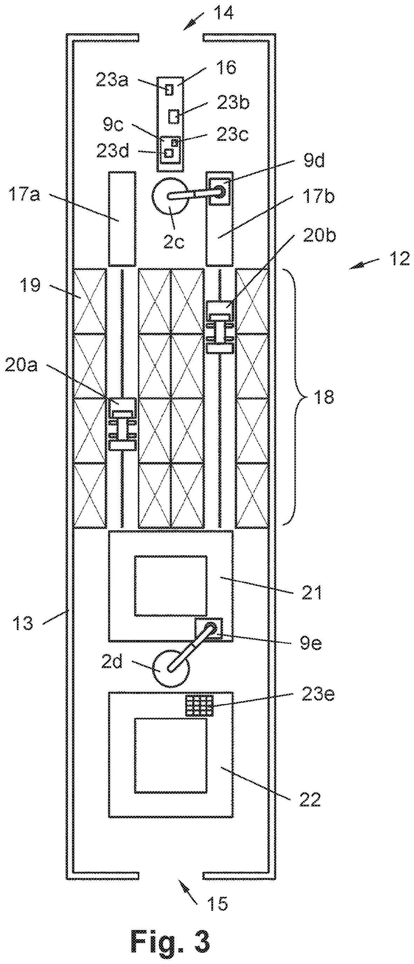

Die Figur 3 zeigt ein Lager- und Kommissioniersystem 12, welches ein Gebäude 13 aufweist, sowie ein Tor an einem Wareneingang 14 und ein Tor an einem Warenausgang 15. Im Bereich des Wareneingangs 14 befinden sich eine erste Förderstrecke 16 und zwei zweite Förderstrecken 17a und 17b. Die erste Förderstrecke 16 verbindet den Wareneingang 14 mit einem Robotersystem 2c. Die zwei zweiten Förderstrecken 17a und 17b verbinden das Robotersystem 2c mit einem Lagerbereich 18, der mehrere Lagerregale 19 sowie Regalbediengeräte 20a und 20b umfasst, die in zwischen den Lagerregalen 19 verlaufenden Regalgassen verfahren. An jenem Ende der Regalgassen, welches den zweiten Förderstrecken 17a und 17b gegenüberliegt, ist eine dritte Förderstrecke 21 angeordnet, die in diesem Beispiel ringförmig ausgebildet ist und zu einem weiteren Robotersystem 2d führt. Im Wirkungsbereich des Robotersystems 2d ist auch eine vierte Förderstrecke 22 angeordnet, welche das Robotersystem 2d fördertechnisch mit dem Warenausgang 15 verbindet.

Die Figur 4 zeigt den Behälter 9a nun im Detail. Der Behälter 9a umfasst einen Behälterboden 24, an diesem aufragende Seitenwände 25 und eine durch die Seitenwände 25 begrenzte Beladeöffnung 26. Zudem weist der Behälter 9a einen Laderaum 27a auf, der nach oben hin durch die genannte Beladeöffnung 26 begrenzt ist.

Die Figur 5 zeigt den Behälter 9a nun mit einem Laderaum 27b, der nach oben hin über die genannte Beladeöffnung 26, konkret über die Ebene 28 der Beladeöffnung 26, hinausragt.

Figur 6 zeigt den Behälter 9a weiterhin mit einem Laderaum 27c, der einerseits nach oben hin über die genannte Beladeöffnung 26, andererseits aber auch seitlich über die Seitenwände 25 hinausragt.

Figur 7 zeigt den Behälter schließlich mit einem Laderaum 27d, der nicht nur nach oben hin über die genannte Beladeöffnung 26 und seitlich über die Seitenwände 25 hinausragt, sondern sich auch in dem über die Seitenwände 25 ragenden Abschnitt nach unten hin unter die Ebene 28 der Beladeöffnung 26 erstreckt.

Das in den Figuren 4 bis 7 dargestellte Ladehilfsmittel 9a ist als Behälter, konkret beispielsweise als Karton, Schachtel oder Box ausgeführt. Grundsätzlich ist es aber auch vorstellbar, dass das in dem vorgestellten Verfahren verwendete Ladehilfsmittel als Palette oder Tablar ausgebildet ist. Da ein Tablar üblicherweise (niedrige) Seitenwände aufweist, kann dieses auch als Behälter aufgefasst werden.

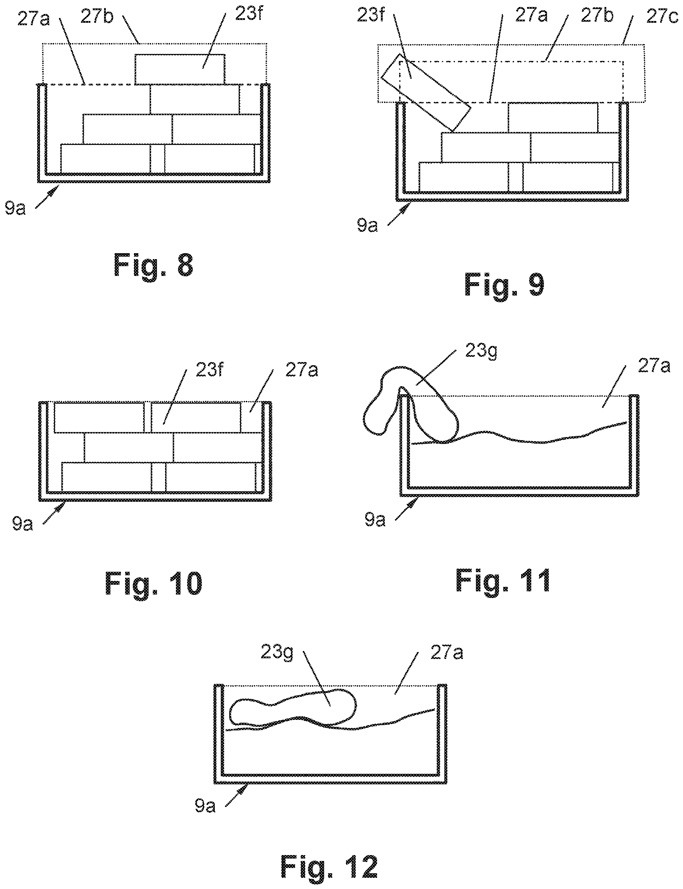

Die Figur 8 zeigt den mit quaderförmigen Waren 23f beladenen Behälter 9a, welche sich nicht alle innerhalb des Laderaums 27a (strichliert dargestellt) befinden, da die oberste Ware 23f über die Ebene 28 der Behälteröffnung 26 hinausragt. Die in der Figur 8 dargestellte Beladung ist für den Laderaum 27a demzufolge nicht zulässig. Die Waren 23f befinden sich jedoch alle innerhalb des Laderaums 27b (punktiert dargestellt), obwohl die oberste Ware 23f über die Ebene 28 der Behälteröffnung 26 hinausragt. Die in der Figur 8 dargestellte Beladung ist für den Laderaum 27b demzufolge zulässig. Aus der Darstellung wird klar, dass der Laderaum 27b ein höheres Volumen aufweist als das durch den Behälterboden 24, die Seitenwände 25 und die Behälteröffnung 26 eingeschlossene Volumen, und dass der Behälter 9a stärker beladen ist als dies in automatischen Lager- und Kommissioniersystemen nach dem Stand der Technik der Fall ist. Nach dem Stand der Technik werden Behälter 9a nämlich bis maximal zur Ebene 28 der Behälteröffnung 26 beladen. Demzufolge wird die Leistung eines Lager- und Kommissioniersystems 12, in dem Behälter 9a mit volumenmäßig relativ großen Laderäumen 27b, 27c und 27b verwendet werden, gegenüber herkömmlichen Lager- und Kommissioniersystemen erhöht.

Die Figur 9 zeigt den mit quaderförmigen Waren 23f beladenen Behälter 9a, welche sich nicht alle innerhalb des Laderaums 27a (strichliert dargestellt) befinden, da die oberste Ware 23f über die Ebene 28 der Behälteröffnung 26 hinausragt. Die in der Figur 9 dargestellte Beladung ist für den Laderaum 27a demzufolge nicht zulässig. Die oberste Ware 23f ragt zudem über den Laderaum 27b (strichpunktiert dargestellt) hinaus. Die in der Figur 9 dargestellte Beladung ist daher auch für den Laderaum 27b nicht zulässig. Die Figur 9 zeigt jedoch einen Laderaum 27c (punktiert dargestellt), welcher sich seitlich über die Seitenwände 25 erstreckt. Die oberste Ware 23f ragt zwar seitlich über die Behälterwand 25 hinaus, befindet sich jedoch immer noch innerhalb des Laderaums 27c und verursacht daher keinen negativen Ausgang der Prüfung, ob sich alle Waren 23f innerhalb des Laderaum 27c befinden.

Weiterhin zeigt die Figur 10 den mit Waren 23f beladenen Behälter 9a, jedoch mit einem Laderaum 27a, der sich lediglich bis zur Beladeöffnung 26 erstreckt. Auch hier sind alle Waren 23f innerhalb des Laderaums 27a angeordnet und verursachen daher keinen negativen Ausgang der Prüfung, ob sich alle Waren 23f innerhalb des Laderaums 27a befinden.

Die Figur 11 zeigt den mit Waren 23g beladenen Behälter 9a, welcher wiederum einen Laderaum 27a aufweist, der sich lediglich bis zur Beladeöffnung 26 erstreckt. In diesem Beispiel hängt eine biegeschlaffe Ware 23g über den Behälterrand hinaus, wodurch die Prüfung, ob sich alle Waren 23g innerhalb des Laderaums 27a befinden, negativ ausfällt. Bei einem Laderaum, der sich in dem über die Seitenwände 25 ragenden Abschnitt nach unten hin unter die Ebene 28 der Beladeöffnung 26 erstreckt, so wie das in der Figur 7 für den Laderaum 27d dargestellt ist, wäre dagegen denkbar, dass die genannte Prüfung positiv ausfällt, sofern der Laderaum für die Ware 23g groß genug ausgebildet ist.

Aus der Figur 11 ist insbesondere auch erkennbar, dass sich das vorgeschlagene Verfahren beziehungsweise das vorgeschlagene Robotersystem 2a..2d, sowie das vorgeschlagene Lager- und Kommissioniersystem 12 nicht nur für die Manipulation von mehr oder minder starren und quaderförmigen Körpern (Waren 23f), sondern auch für die Manipulation von biegeschlaffen und unregelmäßig geformten Waren 23g eignet.

Die Figur 12 zeigt schließlich einen mit den unregelmäßig geformten Waren 23g beladenen Behälter 9a, bei dem sich alle Waren 23g innerhalb des bis zur Beladeöffnung 28 erstreckenden Laderaums 27a befinden. Die Prüfung, ob sich alle Waren 23g innerhalb des Laderaums 27a befinden, fällt daher wiederum positiv aus.

Die Figuren 4 bis 12 wurden auf den Behälter 9a bezogen. Selbstverständlich kann die offenbarte Lehre aber auch uneingeschränkt auf die Behälter 9b..9e angewandt werden.

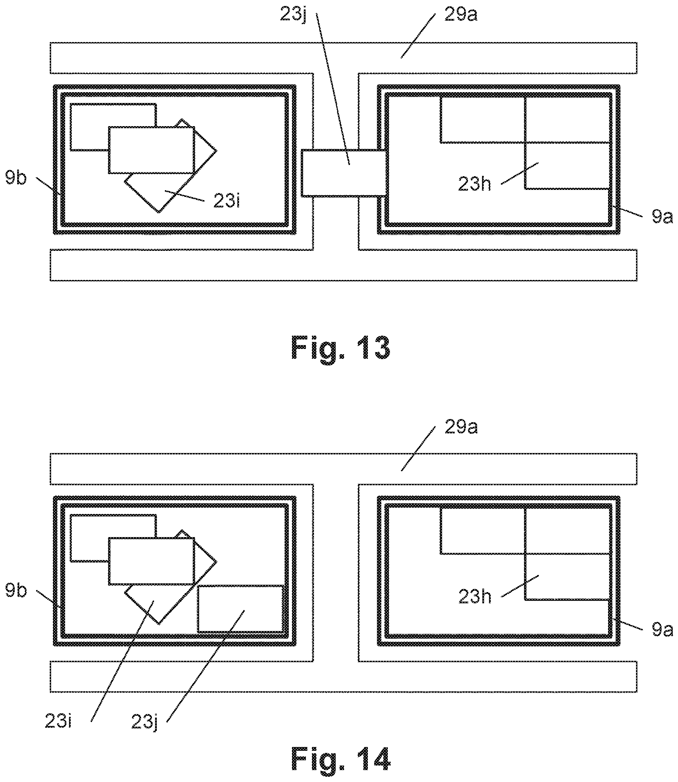

Figur 13 zeigt eine Anordnung mit zwei Behältern 9a, 9b und einer Ablagefläche 29a, die sich zwischen diesen Behältern 9a, 9b sowie teilweise rund um die Behälter 9a, 9b erstreckt. Auf diese Weise kann verhindert werden, dass eine Ware 23j, die unbeabsichtigt von der Greifeinheit 4 heruntergefallen ist, auf den Fußboden fällt. Stattdessen fällt die Ware 23j auf die Ablagefläche 29a, so wie dies in der Figur 13 dargestellt ist. Von dieser Ablagefläche 29a kann die Ware 23j aufgenommen und entweder in den ersten Behälter 9a oder in den zweiten Behälter 9b abgelegt werden. Figur 14 zeigt die Anordnung aus Figur 13 in einem Zustand, in dem die Ware 23j in den zweiten Behälter 9b abgelegt wurde.

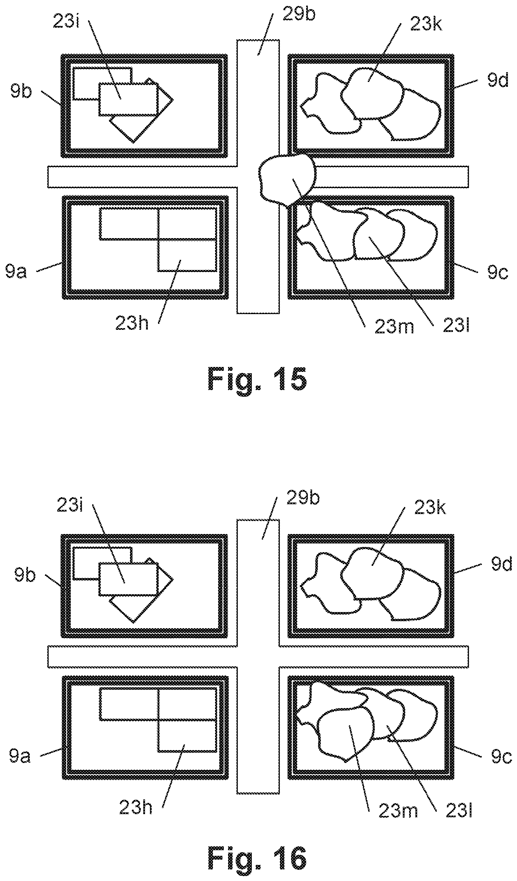

Die Figur 15 zeigt eine Anordnung mit vier Behältern 9a..9d und einer Ablagefläche 29b, welche der in den Figuren 13 und 14 dargestellten Anordnung sehr ähnlich ist. Im Unterschied dazu sind jedoch nicht zwei Behälter 9a und 9b vorhanden, sondern eben vier Behälter 9a..9d. Die Ablagefläche 29b erstreckt sich kreuzförmig zwischen den Behältern 9a 9d. In diesem Beispiel wird wiederum angenommen, dass eine Ware 23m unbeabsichtigt von der Greifeinheit 4 auf die Ablagefläche 29b gefallen ist. Von dieser Ablagefläche 29b kann die Ware 23m aufgenommen und in einen der Behälter 9a..9d abgelegt werden. Figur 16 zeigt die Anordnung aus Figur 15 in einem Zustand, in dem die Ware 23m in den Behälter 9c abgelegt wurde.

Die in den Figuren 13 bis 16 gezeigte Ablageflächen 29a, 29b können durch horizontale Flächen gebildet sein (und gegebenenfalls einen Klärplatz bilden), sie können jedoch auch zu einen der Behälter 9a..9d hin geneigt sein. Auf diese Weise rutschen von der Greifeinheit 4 heruntergefallene Waren 23a..23n automatisch an einen der vorgegebenen Plätze. Geneigte Ablageflächen 29a, 29b dienen vor allem dazu, unbeabsichtigt von der Greifeinheit 4 heruntergefallene Waren 23a..23n automatisch an einen der vorgegebenen Plätze zu befördern. Denkbar wäre aber auch, dass die Waren 23a..23n willentlich auf eine geneigte Ablagefläche 29a, 29b fallen gelassen oder dort abgelegt werden, um die Waren 23a..23n automatisch an einen der vorgegebenen Plätze zu befördern. Vorteilhaft ist dabei, dass der von der Greifeinheit 4 zurückgelegte Weg beim Umladen von Waren 23a..23n reduziert werden kann.

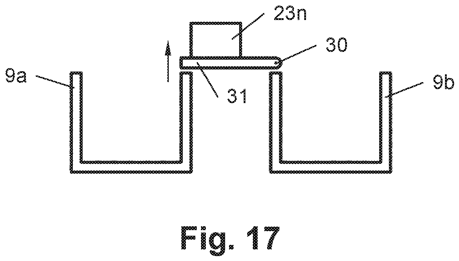

Fig. 17 zeigt nun ein Beispiel für eine zwischen einem ersten Behälter 9a und einem zweiten Behälter 9b angeordnete und um eine Drehachse 30 schwenkbare Klappe 31. Auf diese Weise kann eine von der Greifeinheit 4 unbeabsichtigt heruntergefallene Ware 23n durch Hochschwenken der Klappe 31 gezielt in den zweiten Behälter 9b befördert werden. Dazu kann die Klappe 31 einen eigenen Schwenkantrieb aufweisen, oder das Hochschwenken der Klappe 31 erfolgt durch den Roboter 1a, 1b selbst. Vorteilhaft braucht die (unter Umständen schwierig aufnehmbare/greifbare) Ware 23n dafür nicht durch die Greifeinheit 4 erfasst werden.

Denkbar ist auch, dass die Klappe 31 alternativ oder zusätzlich zum ersten Behälter 9a hin neigbar ist. Denkbar ist weiterhin, dass die Klappe 31 alternativ oder zusätzlich zu einer Ablageposition / einem Klärplatz beziehungsweise einem dort abgestellten Behälter neigbar ist. Denkbar ist weiterhin, dass die horizontal ausgerichtete Klappe 31 selbst den Klärplatz bildet.

An dieser Stelle wird angemerkt, dass die in den Figuren 13 und 14 gezeigte Ablagefläche 29a, die in den Figuren 15 und 16 gezeigte Ablagefläche 29b sowie die in der Figur 17 gezeigte Klappe 31 auch in einem Robotersystem 2a, 2b nach den Figuren 1 und 2, sowie in einem Lager- und Kommissioniersystem 12 nach der Figur 3 eingesetzt werden können. Zudem ist es natürlich möglich, dass sich die Ablagefläche 29a, 29b rund um die Behälter 9a..9d erstreckt und diese umschließt, sodass das Risiko, dass eine Ware 23a..23n auf den Fußboden fällt, noch geringer ist.

Die Funktion der in den Figuren dargestellten Anordnungen wird nun untenstehend im Detail erläutert:
In den Figuren 1 und 2 ist der Ablauf beim Umladen von Waren 23a..23n mithilfe der Greifeinheit 4 aus einem ersten Warenträger 9a (Quellbehälter) in einen zweiten Warenträger 9b (Zielbehälter) dargestellt. Die als kistenförmiger Behälter ausgebildeten Warenträger 9a und 9b werden für den Umladevorgang mit der Fördertechnik 10a und 10b zum Roboter 1a, 1b hin transportiert und nach dem Umladevorgang vom Roboter 1a, 1b weg transportiert. Der Transport der Waren 23a..23n mithilfe von Ladehilfsmitteln 9a und 9b ist aber keine notwendige Bedingung, sondern die Waren 23a..23n können auch direkt auf der Fördertechnik transportiert werden, wenn diese beispielweise einen Bandförderer, einen Gliederbandförderer und dgl. als erste Förderstrecke 10a und einen Bandförderer, einen Gliederbandförderer und dgl. als zweite Förderstrecke 10b umfasst. Selbstverständlich könnten auch Rollenförderer 10a und 10b vorgesehen sein. Gleichermaßen könnten anstelle der Behälter 9a und 9b auch andere Ladehilfsmittel vorgesehen sein, beispielsweise Tablare oder Kartons,

Werden im Bereich des Robotersystems 2a..2d (Quell)Ladehilfsmittel (Behälter, Tablare, Kartons) als erste Warenträger verwendet, von welchen oder aus welchen Waren 23a..23n mit den Sauggreifern 5 entnommen werden, so können die (Quell)Ladehilfs-mittel vorteilhaft sortenrein mit Waren 23a..23n oder fachunterteilt sortenrein mit Waren 23a..23n beladen sein. Beispielsweise enthält ein erstes Ladehilfsmittel die Ware "A", ein zweites Ladehilfsmittel die Ware "B" usw. Andererseits ist es auch möglich, dass ein Ladehilfsmittel durch Trennwände in mehrere Aufnahmefächer unterteilt ist und unterschiedliche Waren "A", "B" aufnehmen kann, wobei im ersten Aufnahmefach eine Ware "A" und im zweiten Aufnahmefach eine Ware "B" aufgenommen werden kann.

In der Figur 3 ist eine etwas komplexere Anordnung dargestellt, konkret ein Lager- und Kommissioniersystem 12. Dabei werden Waren 23a..23e am Wareneingang 14 angeliefert, auf die erste Förderstrecke 16 geladen, vom Robotersystem 2c von der ersten Förderstrecke 16 auf die zweite Förderstrecken 17a und 17b umgeladen und mithilfe der Regalbediengeräte 20a und 20b in die Lagerregale 19 eingelagert. Die erste Förderstrecke 16 fungiert bei diesem Vorgang als erster Warenträger beziehungsweise Quelle, wohingegen die zweiten Förderstrecken 17a und 17b bei diesem Vorgang als zweite Warenträger beziehungsweise Ziel fungieren.

Ist ein Kommissionierauftrag abzuarbeiten, werden die dem Auftrag zugeordneten Waren 23a..23e mithilfe zumindest eines Regalbediengeräts 20a und 20b aus zumindest einem Lagerregal 19 ausgelagert und auf die dritte Förderstrecke 21 übergeben. In Folge werden die Waren 23a..23e mithilfe der dritten Förderstrecke 21 zum Robotersystem 2d transportiert und von diesem von der dritten Förderstrecke 21 auf die vierte Förderstrecke 22 umgeladen und schließlich mithilfe der vierten Förderstrecke 22 zum Warenausgang 15 transportiert. Die dritte Förderstrecke 21 fungiert bei diesem Vorgang als erster Warenträger beziehungsweise Quelle, wohingegen die vierte Förderstrecke 22 bei diesem Vorgang als zweiter Warenträger beziehungsweise Ziel fungiert.

Wie aus der Figur 3 erkennbar ist, werden die Waren 23a, 23b und 23e direkt auf den als Warenträgern fungierenden Förderstrecken 16, 17a, 17b, 21 und 22 transportiert, wohingegen die Waren 23c und 23d mithilfe von Ladehilfsmitteln 9c..9e transportiert werden, die dementsprechend ebenfalls als Warenträger fungieren. In der Figur 3 liegt also eine gemischte Transportart vor. Denkbar wäre natürlich auch, dass die Waren 23a..23e ausschließlich auf den als Warenträgern fungierenden Förderstrecken 16, 17a, 17b, 21 und 22 transportiert werden oder ausschließlich mithilfe von Ladehilfsmitteln 9c..9e.

Die Ausbildung und Anordnung der Förderstrecken 16, 17a, 17b, 21 und 22 in der Figur 3 ist selbstverständlich nur illustrativ zu sehen, und es sind auch andere Formen und Anordnungen der genannten Förderstrecken 16, 17a, 17b, 21 und 22 denkbar. Insbesondere könnte auch am Wareneingang 14 eine ringförmige Förderstrecke angeordnet sein, oder es könnten lineare Förderstrecken am Warenausgang 15 vorgesehen sein. Die fördertechnische Anbindung des Robotersystems 2c und 2d an den Wareneingang 14, an den Lagerbereich 18 und an den Warenausgang 15 erfolgt auch nicht zwingend über ortsgebundene Fördermittel, so wie das in der Figur 3 dargestellt ist, sondern könnte auch ganz oder teilweise über autonome Transportfahrzeuge (insbesondere autonome Flurförderfahrzeuge) erfolgen, deren Ladeplattformen dann ebenfalls als Warenträger dienen.

Denkbar wäre weiterhin, dass die Waren 23a..23e vom Robotersystem 2c direkt auf die Regalbediengeräte 20a und 20b geladen oder durch das Robotersystem 2d direkt von den Regalbediengeräten 20a und 20b übernommen werden. In diesem Fall dienen die Ladeplattformen der Regalbediengeräte 20a und 20b ebenfalls als Warenträger.

An dieser Stelle wird auch angemerkt, dass die Roboter 1a und 1b nicht notwendigerweise als Gelenkarmroboter ausgeführt sein müssen, sondern beispielsweise auch als Portalroboter ausgebildet sein können.

Es sei auch noch erwähnt, dass die Waren 23a..23n im oder am ersten Warenträger 9a, 9c, 9e, 10a, 16, 21 nebeneinander, übereinander, stehend oder liegend angeordnet sein können, daher ungeordnet (chaotisch) bzw. in Wirrlage.

Weiterhin wird angemerkt, dass das Sensorsystem nicht nur Kameras 8a..8e aufweisen kann, sondern alternativ oder zusätzlich auch einen Raumtiefensensor, einen Laserscanner und/oder einen Ultraschallsensor umfassen kann. Mithilfe dieser Sensoren kann insbesondere ein dreidimensionales Abbild der in oder auf einem Warenträger (zum Beispiel in den Behältern 9a..9e oder auf den Förderstrecken 10a und 10b) liegenden Waren 23a..23n erfasst werden.

Generell kann durch eine dreidimensionale Erfassung eine Oberflächenstruktur der Waren 23a..23n ermittelt und die Eignung für das Greifen durch die Sauggreifer 5 festgestellt werden. Beispielsweise eignen sich stark konvexe Oberflächen weniger zum Greifen, wohingegen ebene Flächen besonders gut greifbar sind.

Generell erfolgt bei den oben beschriebenen Abläufen in einem Robotersystem 2a, 2b oder im Lager- und Kommissioniersystem 12 nach dem Aufnehmen einer Ware 23a..23n durch die Greifeinheit 4 von oder aus dem ersten Warenträger 9a eine Prüfung, ob eine Ware 23a..23n über den besagten Laderaum 27a..27d hinausragt (vergleiche die Figuren 4 bis 12). Wenn der Ausgang der besagten Prüfung positiv ist, kann die über den Laderaum 27a..27d hinausragende Ware 23a..23n in einem weiteren Schritt von der Greifeinheit 4 aufgenommen und an anderer Position abgelegt werden (Fall a). Diese andere Position kann sich insbesondere im Laderaum 27a..27d des Ladehilfsmittels 9a befinden, von den aus die betreffende Ware 23a..23n aufgenommen wurde. Die andere Position kann sich aber auch im Laderaum 27a..27d eines anderen Ladehilfsmittels 9b befinden. Schließlich ist es auch möglich, die Ware 23a..23n an anderer Position außerhalb eines Laderaums 27a..27d eines Ladehilfsmittels 9a, 9b abzulegen, beispielsweise an einem Klärplatz. Alternativ ist es auch möglich, den über den Laderaum 27a..27d ragenden Teil der Ware 23a..23n mithilfe der Greifeinheit 4 in den Laderaum 27a..27d zurückzubewegen (Fall b).

Der Ausgang der besagten Prüfung kann insbesondere dann positiv ausfallen, wenn eine Ware 23a..23n unbeabsichtigt von der Greifeinheit 4 herunterfällt oder sich eine für die Ware 23a..23n berechnete Position zum Ablegen oder Abwerfen auf den zweiten Warenträger 9b als nicht erreicht herausstellt.

Insbesondere ist bei den obigen Abläufen denkbar, dass die Prüfung, ob eine Ware 23a..23n über einen Laderaum 27a..27d hinausragt sowie die Schritte a) oder b) rekursiv wiederholt werden, bis der Ausgang der genannten Prüfung negativ ist. Dabei wird davon ausgegangen, dass das Robotersystem 2a..2d grundsätzlich in der Lage ist, aufgetretene Fehler zu beheben.

Insbesondere wäre aber auch vorstellbar, dass die Prüfung, ob eine Ware 23a..23n über einen Laderaum 27a..27d hinausragt sowie die Schritte a) oder b) rekursiv wiederholt werden und die rekursive Wiederholung dieses Ablaufs nach einer vorgegebenen Anzahl an Wiederholungen abgebrochen und eine Alarmmeldung ausgegeben wird. Bei dieser Variante wird gegebenenfalls eine Bedienperson eingeschalten, um das aufgetretene Problem zu lösen.

Generell kann das unbeabsichtigte Herunterfallen einer Ware 23a..23n durch Überwachen eines Belegtstatus der Greifeinheit 4 nach dem Aufnehmen einer Ware 23a..23n detektiert werden. Das ungewollte Herunterfallen einer Ware 23a..23n ist dadurch gekennzeichnet, dass die Greifeinheit 4 unbelegt, jedoch aktiviert ist. In Folge wird die Prüfung, ob eine Ware 23a..23n über einen Laderaum 27a..27d hinausragt, eingeleitet. Ist die Greifeinheit 4 dagegen belegt und aktiviert, dann wird eine Ware 23a..23n durch die Greifeinheit 4 gehalten. Ist die Greifeinheit 4 unbelegt und deaktiviert, dann wurde eine Ware 23a..23n gewollt beziehungsweise willentlich abgelegt oder fallen gelassen. Die Überwachung des Belegtstatus der Greifeinheit 4 kann zum Beispiel durch eine speziell dafür ausgelegte Sensorik auf der Greifeinheit 4 erfolgen (nicht dargestellt). Die Überwachung des Belegtstatus der Greifeinheit 4 kann aber auch durch das Sensorsystem 8a..8e erfolgen, welches zur Erfassung des Laderaums 27a..27d und der im Bereich des Laderaums 27a..27d befindlichen Waren 23a..23n vorgesehen ist (also in dem in den Figuren 1 und 2 gezeigten Beispiel mit den Kameras 8a..8e).

Günstig ist es darüber hinaus, wenn die Prüfung, ob eine Ware 23a..23n über einen Laderaum 27a..27d hinausragt, nach dem vollständigen Herausbewegen der Greifeinheit 4 und/oder der von der Greifeinheit 4 aufgenommenen Ware 23a..23n aus dem Laderaum 27a..27d erfolgt. Erfolgt die besagte Prüfung nach dem Aufnehmen der Ware 23a..23n, sollte die Greifeinheit 4 samt der damit gehaltenen Ware 23a..23n demnach vor der Prüfung vollständig aus dem Laderaum 27a..27d heraus bewegt worden sein. Erfolgt die besagte Prüfung nach dem Ablegen der Ware 23a..23n, braucht nur die Greifeinheit 4 (die ja keine Ware 23a..23n mehr hält) vor der Prüfung vollständig aus dem Laderaum 27a..27d heraus bewegt worden sein. Vorteilhaft ist es weiterhin, wenn die Prüfung, ob eine Ware 23a..23n über den Laderaum 27a..27d hinausragt, nach dem vollständigen Herausbewegen der Greifeinheit 4 und/oder der von der Greifeinheit 4 aufgenommenen Ware 23a..23n aus einem Erfassungsbereich des Sensorsystems 8a..8e erfolgt. Zudem ist es von Vorteil, wenn die Prüfung, ob eine Ware 23a..23n über den Laderaum 27a..27d hinausragt, nach dem vollständigen seitlichen Wegbewegen der Greifeinheit 4 und der von der Greifeinheit 4 aufgenommenen Ware 23a..23n von einem Warenträger 9a..9d, 10a, 10b, 16, 17a, 17b, 21, 22 erfolgt. Durch diese Maßnahmen wird sichergestellt, dass sich im Laderaum 27a..27d ein statischer Zustand einstellt, der nicht durch den Umladevorgang der Waren 23a..23n gestört wird. Dementsprechend wird dadurch auch sichergestellt, dass die Prüfung, ob eine Ware 23a..23n über den Laderaum 27a..27d hinausragt, valide ist.

Günstig ist es weiterhin, wenn die Prüfung, ob eine Ware 23a..23n über den genannten Laderaum 27a..27d hinausragt, nach jedem Aufnehmen einer Ware 23a..23n durchgeführt wird. Dadurch kann eine über den Laderaum 27a..27d ragende Ware 23a..23n zeitnah zum Auftreten des Fehlers detektiert werden, und es wird vermieden, dass sich die Auswirkungen mehrerer hintereinander auftretender Fehler akkumulieren. Insbesondere betreffen die genannten Maßnahmen den ersten Warenträger 9a (Quelle).

In ähnlicher Weise ist es günstig, wenn die Prüfung, ob eine Ware 23a..23n über den genannten Laderaum 27a..27d hinausragt, nach jedem Ablegen einer Ware 23a..23n in oder auf den zweiten Warenträger 9b durchgeführt wird. Dadurch kann eine über den Laderaum 27a..27d ragende Ware 23a..23n ebenfalls zeitnah zum Auftreten des Fehlers detektiert werden, und es wird wiederum vermieden, dass sich die Auswirkungen mehrerer hintereinander auftretender Fehler akkumulieren. Insbesondere betreffen diese Maßnahmen den zweiten Warenträger 9b (Ziel).

Vorteilhaft ist es schließlich auch, wenn die Prüfung, ob eine Ware 23a..23n über einen Laderaum 27a..27d hinausragt, nach dem Ablegen einer Vielzahl von Waren 23a..23n (insbesondere nach dem Ablegen aller einem Auftrag zugeordneter Waren23a..23n) in oder auf den zweiten Warenträger 9b durchgeführt wird. Dadurch kann die Anzahl der Prüfungen und damit der Rechenaufwand und die Rechenzeit für die Bearbeitung derselben reduziert werden. Diese Variante eignet sich daher insbesondere für Robotersysteme 2a..2d mit begrenzter Rechenleistung.

Generell kann eine Prüfung nach dem Aufnehmen der Ware 23a..23n (aber vor dem Ablegen derselben) und eine weitere Prüfung nach dem Ablegen der Ware 23a..23n erfolgen. Denkbar ist aber auch, dass nur eine Prüfung nach dem Ablegen der Ware 23a..23n (und damit zeitlich nach dem Aufnehmen der Ware 23a..23n) erfolgt.

Günstig ist es auch, wenn die Prüfung, ob eine Ware 23a..23n über den Laderaum 7a..7d hinausragt, nach dem Greifen/Aufnehmen einer anderen Ware 23a..23n von oder aus dem ersten Warenträger 9a erfolgt. Diese Variante betrifft im besonderen zwei Fälle, nämlich wenn eine andere als die aufgenommene Ware 23a..23n in oder auf den ersten Warenträger 9a zurückfällt, oder wenn die Greifeinheit 4 eine Ware 23a..23n in oder auf den zweiten Warenträger 9b abgelegt hat, jedoch eine optische Erfassung des zweiten Warenträgers 9b und der darin lagernden Waren 23a..23n verhindert. Im ersten Fall wird eine andere als die aufgenommene Ware 23a..23n unbeabsichtigt mitgezogen und kann in Folge über den Laderaum 17a.. 17d des ersten Warenträgers 9a hinausragen. Im zweiten Fall kann eine Erfassung (insbesondere eine optische Erfassung) des zweiten Warenträgers 9b und der darin lagernden Waren 23a..23n erst dann erfolgen, wenn der Greifeinheit 4 aus dem Bereich des zweiten Warenträgers 9b heraus bewegt wird.

Generell kann die Prüfung, ob eine Ware 23a..23n über den Laderaum 7a..7d hinausragt, während der Bewegung der Greifeinheit 4 vom ersten Warenträger 9a zum zweiten Warenträger 9b erfolgen und umgekehrt, sodass durch die Prüfung keine merklichen Wartezeiten entstehen. Ladehilfsmittel können somit unmittelbar nach dem Umpack- oder Kommissioniervorgang durch eine Fördertechnik 10a, 10b abtransportiert werden.

In einer besonders vorteilhaften Variante erfolgt
- das Greifen/Aufnehmen einer Ware 23a..23n von oder aus dem ersten Warenträger 9a und eine Erfassung des zweiten Warenträgers 9b und der in oder auf dem zweiten Warenträger 9b befindlichen Waren 23a..23n mit Hilfe des Sensorsystems 8a..8e, und
- das Ablegen einer Ware 23a..23n in oder auf den zweiten Warenträger 9b und eine Erfassung des ersten Warenträgers 9a beziehungsweise der in oder auf dem ersten Warenträger 9a befindlichen Waren 23a..23n mit Hilfe des Sensorsystems 8a..8e im Wechsel.

Diese Variante kann besonders gut anhand des Robotersystems 1a aus Fig. 1 erläutert werden:
- In einem ersten Zeitabschnitt wird eine Ware 23a..23n aus dem ersten Warenträger 9a aufgenommen.
- In einem zweiten Zeitabschnitt wird die Ware 23a..23n in den zweiten Warenträger 9b abgelegt. Gegebenenfalls erfolgt auch eine Korrektur betreffend Waren 23a..23n, die über den Laderaum 7a..7d des zweiten Warenträgers 9b hinausragen, gemäß den Fällen a) oder b). Im zweiten Zeitabschnitt wird mit der Kamera 8a zudem der erste Warenträger 9a samt den darin lagernden Waren 23a..23n erfasst.
- In einem dritten Zeitabschnitt fährt die Greifeinheit 4 zum ersten Warenträger 9a zurück und nimmt eine weitere Ware 23a..23n aus dem ersten Warenträger 9a auf. Gegebenenfalls erfolgt eine Korrektur betreffend Waren 23a..23n, die über den Laderaum 7a..7d des ersten Warenträgers 9a hinausragen, gemäß den Fällen a) oder b). Im dritten Zeitabschnitt wird mit der Kamera 8b zudem der zweite Warenträger 9b samt den darin lagernden Waren 23a..23n erfasst.
- In einem vierten Zeitabschnitt wird die Ware 23a..23n in den zweiten Warenträger 9b abgelegt. Gegebenenfalls erfolgt wiederum eine Korrektur betreffend Waren 23a..23n, die über den Laderaum 7a..7d des zweiten Warenträgers 9b hinausragen, gemäß den Fällen a) oder b). Im vierten Zeitabschnitt wird mit der Kamera 8a zudem der erste Warenträger 9a samt den darin lagernden Waren 23a..23n erfasst.
- In Folge wiederholen sich die für die ungeraden Zeitabschnitte und geraden Zeitabschnitte beschriebenen Vorgänge beliebig oft.

Dem Greifen einer Ware 23a..23n und der Korrektur betreffend einer über den Laderaum 7a..7d des ersten Warenträgers 9a hinausragenden Ware 23a..23n im dritten Zeitabschnitt wird das im zweiten Zeitabschnitt erfasste Kamerabild des ersten Warenträgers 9a samt den darin lagernden Waren 23a..23n zugrunde gelegt. Dem Ablegen einer Ware 23a..23n und der Korrektur betreffend einer über den Laderaum 7a..7d des zweiten Warenträgers 9b hinausragenden Ware 23a..23n im vierten Zeitabschnitt wird das im dritten Zeitabschnitt erfasste Kamerabild des zweiten Warenträgers 9b samt den darin lagernden Waren 23a..23n zugrunde gelegt, und so weiter. Die in den ungeraden Zeitabschnitten und in den geraden Zeitabschnitten ablaufenden Vorgänge wiederholen sich also "im Wechsel". Dazu wird angemerkt, dass die Zeitabschnitte völlig voneinander getrennt sein können, sich die Zeitabschnitte aber auch zeitlich überschneiden können.

Die obige Variante wurde anhand des Robotersystems 2a erläutert. Selbstverständlich bezieht sie sich aber auch uneingeschränkt auf das Robotersystem 2b aus Fig. 2 oder auf das Lager- und Kommissioniersystem 12 aus Fig. 3.

Durch die vorgeschlagenen Maßnahmen wird eine über den Laderaum 27a..27d eines Ladehilfsmittels 9a..9e hinausragende Ware 23a..23n erkannt, wodurch Störungen bei der Förderung und Manipulation in einem Lager- und Kommissioniersystem 12 vermieden werden können, etwa wenn die Ladehilfsmittel 9a..9e bei ihrem Transport Bereiche mit niedriger Durchfahrtshöhe passieren oder wenn die Ladehilfsmittel 9a..9e starken Beschleunigungen und/oder Vibrationen ausgesetzt werden und über einen Laderaum 27a..27d ragende Waren 23a..23n aus oder von dem Ladehilfsmittel 9a..9e fallen könnten. Durch die vorgeschlagenen Maßnahmen wird somit die Verfügbarkeit eines Lager- und Kommissioniersystems 12 erhöht. Durch die ganz bis zu einem Behälterrand beziehungsweise sogar darüber hinaus beladbaren Ladehilfsmittel 9a..9e kann zudem die Leistung des Lager- und Kommissioniersystems 12 gegenüber dem Stand der Technik deutlich erhöht werden. Diese benötigen daher auch weniger Bauraum als das bisher der Fall war.

Abschließend wird auch festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1a, 1b: Roboter
- 2a..2d: Robotersystem
- 3: Roboterbasis
- 4: Greifeinheit
- 5: Sauggreifer

- 6: erstes Roboterarm Segment
- 7: zweites Roboterarm Segment
- 8a..8e: Kamera (Sensorsystem)
- 9a..9e: Behälter (Warenträger)
- 10a, 10b: Fördertechnik (Warenträger)

- 11: Steuerung
- 12: Lager- und Kommissioniersystem
- 13: Gebäudewand
- 14: Wareneingang
- 15: Warenausgang

- 16: erste Förderstrecke (Warenträger)
- 17a, 17b: zweite Förderstrecke (Warenträger)
- 18: Lagerbereich
- 19: Lagerregal
- 20a, 20b: Regalbediengerät

- 21: dritte Förderstrecke (Warenträger)
- 22: vierte Förderstrecke (Warenträger)
- 23a..23n: Ware
- 24: Behälterboden
- 25: Seitenwand

- 26: Beladeöffnung
- 27a..27d: Laderaum
- 28: Ebene der Beladeöffnung
- 29a, 29b: Ablagefläche
- 30: Drehachse
- 31: Klappe

## Patentansprüche

1. Verfahren zur Steuerung eines Roboters (1a, 1b) in einem Lager- und Kommissioniersystem (12), welcher eine gegenüber der Roboterbasis (3) bewegbare Greifeinheit (4) aufweist, bei dem die Waren (23a..23n) mit der Greifeinheit (4) von oder aus einem ersten Warenträger (9a, 9c, 9e, 10a, 16, 21) aufgenommen und in oder auf einen zweiten Warenträger (9b, 9d, 10b, 17a, 17b, 22) abgelegt werden, wobei
- zumindest einer der Warenträger als ein für den Transport der Waren (23a..23n) geeignetes Ladehilfsmittel (9a..9e) ausgebildet ist,
- im Bereich des zumindest einen Ladehilfsmittels (9a..9e) ein Laderaum (27a..27d) definiert wird, welcher zur Unterbringung der Waren (23a..23n) bestimmt ist,
- der Laderaum (27a..27d) und die im Bereich des Laderaums (27a..27d) befindlichen Waren (23a..23n) mithilfe eines Sensorsystems (8a..8e) erfasst werden,
- nach dem Aufnehmen einer Ware (23a..23n) durch die Greifeinheit (4) von oder aus dem ersten Warenträger (9a, 9c, 9e, 10a, 16, 21) eine Prüfung erfolgt, ob eine Ware (23a..23n) über den besagten Laderaum (27a..27d) hinausragt, und
- die über den Laderaum (27a..27d) hinausragende Ware (23a..23n) von der Greifeinheit (4) aufgenommen und an anderer Position abgelegt wird, wenn der Ausgang der besagten Prüfung positiv ist.

2. Verfahren nach Anspruch 1, **dadurch gekennzeichnet, dass** für das Ablegen einer Ware (23a..23n) in oder auf den zweiten Warenträger (9b, 9d, 10b, 17a, 17b, 22) eine Position im Laderaum (27a..27d) berechnet wird, bei der die genannte Ware (23a..23n) voraussichtlich nicht über den genannten Laderaum (27a..27d) hinausragt.

3. Verfahren nach Anspruch 1 oder 2, **dadurch gekennzeichnet, dass** das verwendete Ladehilfsmittel (9a..9e) einen Behälterboden (24), an diesem aufragende Seitenwände (25) und eine durch die Seitenwände (25) begrenzte Beladeöffnung (26) umfasst, und der Laderaum (27a) durch die Beladeöffnung (26) nach oben hin begrenzt ist.

4. Verfahren nach Anspruch 1 oder 2, **dadurch gekennzeichnet, dass** das verwendete Ladehilfsmittel (9a..9e) einen Behälterboden (24), an diesem aufragende Seitenwände (25) und eine durch die Seitenwände (25) begrenzte Beladeöffnung (26) umfasst, und der Laderaum (27b) nach oben hin über die genannte Beladeöffnung (26) hinausragt.

5. Verfahren nach Anspruch 4, **dadurch gekennzeichnet, dass** der Laderaum (27c) seitlich über die Seitenwände (25) des verwendeten Ladehilfsmittels (9a..9e) hinausragt.

6. Verfahren nach Anspruch 5, **dadurch gekennzeichnet, dass** sich der Laderaum (27d) in dem über die Seitenwände (25) ragenden Abschnitt nach unten hin unter die Ebene (28) der Beladeöffnung (26) erstreckt.

7. Verfahren nach einem der Ansprüche 1 bis 6, **dadurch gekennzeichnet, dass** geprüft wird, ob sich eine von der Greifeinheit heruntergefallene Ware (23a..23n) vollständig außerhalb des Laderaums (27a..27d) befindet.

8. Verfahren nach Anspruch 7, **dadurch gekennzeichnet, dass**
- geprüft wird, ob sich die von der Greifeinheit (4) heruntergefallene Ware (23a..23n) auf einer Ablagefläche (29a, 29b) befindet, welche benachbart zum ersten Warenträger (9a, 9c, 9e, 10a, 16, 21) und/oder zum zweiten Warenträger (9b, 9d, 10b, 17a, 17b, 22) angeordnet ist, und
- die auf der Ablagefläche (29a, 29b) befindliche Ware (23a..23n) von der Greifeinheit (4) aufgenommen und
i) in oder auf den ersten Warenträger (9a, 9c, 9e, 10a, 16, 21), oder
ii) in oder auf den zweiten Warenträger (9b, 9d, 10b, 17a, 17b, 22), oder
iii) auf einem Klärplatz
abgelegt wird.

9. Verfahren nach Anspruch 7 oder 8, **dadurch gekennzeichnet, dass** geprüft wird, ob die von der Greifeinheit (4) heruntergefallene Ware (23a..23n) auf den Fußboden gefallen ist.

10. Verfahren nach einem der Ansprüche 1 bis 9, **dadurch gekennzeichnet, dass** die Prüfung, ob eine Ware (23a..23n) über den Laderaum (27a..27d) hinausragt, und der Schritt des Aufnehmens der über den Laderaum (27a..27d) hinausragenden Ware (23a..23n) von der Greifeinheit (4) und Ablegens an anderer Position, wenn der Ausgang der besagten Prüfung positiv ist, rekursiv wiederholt wird, bis der Ausgang der genannten Prüfung negativ ist.

11. Verfahren nach einem der Ansprüche 1 bis 9, **dadurch gekennzeichnet, dass** die Prüfung, ob eine Ware (23a..23n) über den Laderaum (27a..27d) hinausragt, und der Schritt des Aufnehmens der über den Laderaum (27a..27d) hinausragenden Ware (23a..23n) von der Greifeinheit (4) und Ablegens an anderer Position, wenn der Ausgang der besagten Prüfung positiv ist, rekursiv wiederholt wird und die rekursive Wiederholung dieses Ablaufs nach einer vorgegebenen Anzahl an Wiederholungen abgebrochen und eine Alarmmeldung ausgegeben wird.

12. Verfahren nach einem der Ansprüche 1 bis 11, **dadurch gekennzeichnet, dass**
- das Aufnehmen einer Ware (23a..23n) von oder aus dem ersten Warenträger (9a, 9c, 9e, 10a, 16, 21) und eine Erfassung des zweiten Warenträgers (9b, 9d, 10b, 17a, 17b, 22) und der in oder auf dem zweiten Warenträger (9b, 9d, 10b, 17a, 17b, 22) befindlichen Waren (23a..23n) mit Hilfe des Sensorsystems (8a..8e), und
- das Ablegen einer Ware (23a..23n) in oder auf den zweiten Warenträger (9b, 9d, 10b, 17a, 17b, 22) und eine Erfassung des ersten Warenträgers (9a, 9c, 9e, 10a, 16, 21) und der in oder auf dem ersten Warenträger (9a, 9c, 9e, 10a, 16, 21) befindlichen Waren (23a..23n) mit Hilfe des Sensorsystems (8a..8e) im Wechsel erfolgt.

13. Verfahren nach einem der Ansprüche 1 bis 12, **dadurch gekennzeichnet, dass** die Prüfung, ob eine Ware (23a..23n) über den Laderaum (27a..27d) hinausragt, nach dem Aufnehmen einer anderen Ware (23a..23n) von oder aus dem ersten Warenträger (9a, 9c, 9e, 10a, 16, 21) erfolgt.

14. Verfahren nach einem der Ansprüche 1 bis 13, **dadurch gekennzeichnet, dass** der erste Warenträger als erstes Ladehilfsmittel (9a, 9c, 9e) und der zweite Warenträger als zweites Ladehilfsmittel (9b, 9d) ausgebildet sind, wobei
- im Bereich des ersten Ladehilfsmittels (9a, 9c, 9e) ein Laderaum (27a..27d) definiert wird, welcher zur Unterbringung von Waren (23a..23n) bestimmt ist, und im Bereich des zweiten Ladehilfsmittels (9b, 9d) ein weiterer Laderaum (27a..27d) definiert wird, welcher zur Unterbringung von Waren (23a..23n) bestimmt ist,
- die Laderäume (27a..27d) und die im Bereich der Laderäume (27a..27d) befindlichen Waren (23a..23n) des ersten Ladehilfsmittels (9a, 9c, 9e) und des zweiten Ladehilfsmittels (9b, 9d) jeweils mithilfe des Sensorsystems (8a..8e) erfasst werden,
- nach dem Aufnehmen einer Ware (23a..23n) durch die Greifeinheit (4) von oder aus dem ersten Ladehilfsmittel (9a, 9c, 9e) und nach dem Ablegen der Ware (23a..23n) durch die Greifeinheit (4) in oder auf das zweite Ladehilfsmittel (9b, 9d) jeweils eine Prüfung erfolgt, ob eine Ware (23a..23n) über einen der Laderäume (27a..27d) hinausragt, und
- die über den besagten Laderaum (27a..27d) hinausragende Ware (23a..23n) von der Greifeinheit (4) aufgenommen und an anderer Position abgelegt wird, wenn der Ausgang der besagten Prüfung positiv ist.

15. Verfahren nach einem der Ansprüche 1 bis 14, **dadurch gekennzeichnet, dass** die Prüfung, ob eine Ware (23a..23n) über den Laderaum (27a..27d) hinausragt, nach dem vollständigen Herausbewegen der Greifeinheit (4) und/oder der von der Greifeinheit (4) aufgenommenen Ware (23a..23n) aus dem Laderaum (27a..27d) erfolgt.

16. Verfahren nach einem der Ansprüche 1 bis 15, **dadurch gekennzeichnet, dass** die Prüfung, ob eine Ware (23a..23n) über den Laderaum (27a..27d) hinausragt, nach dem vollständigen Herausbewegen der Greifeinheit (4) und/oder der von der Greifeinheit (4) aufgenommenen Ware (23a..23n) aus einem Erfassungsbereich des Sensorsystems (8a..8e) erfolgt.

17. Verfahren nach einem der Ansprüche 1 bis 16, **dadurch gekennzeichnet, dass** die Prüfung, ob eine Ware (23a..23n) über den Laderaum (27a..27d) hinausragt, nach dem vollständigen seitlichen Wegbewegen der Greifeinheit (4) und der von der Greifeinheit (4) aufgenommenen Ware (23a..23n) von einem Warenträger (9a..9d, 10a, 10b, 16, 17a, 17b, 21, 22) erfolgt.

18. Verfahren nach einem der Ansprüche 1 bis 17, **dadurch gekennzeichnet, dass** die Prüfung, ob eine Ware (23a..23n) über den genannten Laderaum (27a..27d) hinausragt, nach jedem Aufnehmen einer Ware (23a..23n) durchgeführt wird.

19. Verfahren nach einem der Ansprüche 1 bis 18, **dadurch gekennzeichnet, dass** die Prüfung, ob eine Ware (23a..23n) über den genannten Laderaum (27a..27d) hinausragt, nach jedem Ablegen einer Ware (23a..23n) in oder auf den zweiten Warenträger (9b, 9d, 10b, 17a, 17b, 22) durchgeführt wird.

20. Verfahren nach einem der Ansprüche 1 bis 18, **dadurch gekennzeichnet, dass** die Prüfung, ob eine Ware (23a..23n) über den genannten Laderaum (27a..27d) hinausragt, nach dem Ablegen einer Vielzahl von Waren (23a..23n) in oder auf den zweiten Warenträger (9b, 9d, 10b, 17a, 17b, 22) durchgeführt wird.

21. Verfahren nach einem der Ansprüche 1 bis 20, **dadurch gekennzeichnet, dass** ein Belegtstatus der Greifeinheit (4) nach dem Aufnehmen einer Ware (23a..23n) überwacht wird und die Prüfung, ob eine Ware (23a..23n) über den Laderaum (27a..27d) hinausragt, bei Erkennen einer unbelegten jedoch aktivierten Greifeinheit (4) durchgeführt wird.

22. Verfahren nach einem der Ansprüche 1 bis 21, **dadurch gekennzeichnet, dass** die Waren (23a..23n) gemäß einem Auftrag
- mit Hilfe des ersten Warenträgers (9a, 9c, 9e, 10a, 16, 21) zum Roboter (1a, 1b) transportiert werden,
- mit Hilfe des Roboters (1a, 1b) von oder aus dem ersten Warenträger (9a, 9c, 9e, 10a, 16, 21) in oder auf den zweiten Warenträger (9b, 9d, 10b, 17a, 17b, 22) umgeladen werden, und
- mit Hilfe des zweiten Warenträgers (9b, 9d, 10b, 17a, 17b, 22) vom Roboter (1a, 1b) weg transportiert werden.

23. Robotersystem (2a..2d), umfassend
- einen Roboter (1a, 1b) mit einer gegenüber einer Roboterbasis (3) bewegbaren Greifeinheit (4) zum Aufnehmen von Waren (23a..23n), wobei der Roboter (1a, 1b) dazu ausgebildet ist, Waren (23a..23n) mit der Greifeinheit (4) von oder aus einem ersten Warenträger (9a, 9c, 9e, 10a, 16, 21) aufzunehmen und in oder auf einen zweiten Warenträger (9b, 9d, 10b, 17a, 17b, 22) abzulegen und wobei zumindest einer der Warenträger als ein für den Transport der Waren (23a..23n) geeignetes Ladehilfsmittel (9a..9e) ausgebildet ist,
- ein Sensorsystem (8a..8e) zur Erfassung eines Laderaums (27a..27d) des zumindest einen Ladehilfsmittels (9a..9e), welcher zur Unterbringung der Waren (23a..23n) bestimmt ist und welcher sich im Wirkungsbereich des genannten Roboters (1a, 1b) befindet, und
- eine Steuerung (11), welche dazu eingerichtet ist, nach dem Aufnehmen einer Ware (23a..23n) durch die Greifeinheit (4) von oder aus dem ersten Warenträger (9a, 9c, 9e, 10a, 16, 21) zu prüfen, ob eine Ware (23a..23n) über den genannten Laderaum (27a..27d) hinausragt, und den Roboter (1a, 1b) bei positivem Ausgang der Prüfung anzuweisen, die über den Laderaum (27a..27d) hinausragende Ware (23a..23n) aufzunehmen und an anderer Position abzulegen.

24. Robotersystem (2a..2d) nach Anspruch 23, **dadurch gekennzeichnet, dass** das Sensorsystem (8a..8e) eine Kamera und/oder einen Raumtiefensensor und/oder einen Laserscanner und/oder einen Ultraschallsensor umfasst.

25. Robotersystem (2a..2d) nach Anspruch 23 oder 24 **dadurch gekennzeichnet, dass** die Greifeinheit (4) durch zumindest einen Sauggreifer (5) gebildet ist.

26. Robotersystem (2a..2d) nach einem der Ansprüche 23 bis 25, **dadurch gekennzeichnet, dass** der Roboter (1a, 1b) als Gelenkarmroboter oder Portalroboter ausgebildet ist.

27. Lager- und Kommissioniersystem (12) zum Kommissionieren von Waren (23a..23n), umfassend einen Lagerbereich (18) zum Lagern von Waren (23a..23n) und einen Arbeitsplatz zum Kommissionieren / Umpacken von Waren (23a..23n) mit einem Robotersystem (2a..2d), **dadurch gekennzeichnet, dass** das genannte Robotersystem (2a..2d) nach einem der Ansprüche 23 bis 26 ausgebildet ist.

28. Lager- und Kommissioniersystem (12) nach Anspruch 27, **dadurch gekennzeichnet, dass** der Arbeitsplatz zum vollautomatisierten Kommissionieren von Waren (23a..23n) ausgebildet ist, und eine erste Fördertechnik zum Transport von Waren (23a..23n) in oder auf ersten Warenträgern (9a, 9c, 9e, 10a, 16, 21) zwischen dem Lagerbereich (18) und dem Roboter (1a, 1b) am Arbeitsplatz angeordnet ist, und/oder eine zweite Fördertechnik zum Abtransport von Waren (23a..23n) in oder auf zweiten Warenträgern (9b, 9d, 10b, 17a, 17b, 22) zwischen dem Lagerbereich (18) und dem Roboter (1a, 1b) am Arbeitsplatz vorgesehen ist, wobei der Roboter (1a, 1b) dazu ausgebildet ist, zumindest eine Ware (23a..23n) von oder aus dem ersten Warenträger (9a, 9c, 9e, 10a, 16, 21) zu einem Auftrag aufzunehmen und die zumindest eine Ware (23a..23n) in oder auf den zweiten Warenträger (9b, 9d, 10b, 17a, 17b, 22) zu diesem Auftrag abzulegen.

## Claims

1. A method for controlling a robot (1a, 1b) in a storage and order-picking system (12), the robot comprising a gripping unit (4) movable in relation to a robot base (3), in which the articles (23a..23n) are gripped from or out of a first article carrier (9a, 9c, 9e, 10a, 16, 21) and placed in or on a second article carrier (9b, 9d, 10b, 17a, 17b, 22) by the gripping unit (4), wherein
- at least one of the article carriers is configured as a loading aid (9a..9e) suitable for transporting the articles (23a..23n),
- a loading space (27a..27d) is defined in the region of the at least one loading aid (9a..9e), the loading space is intended for accommodating the articles (23a..23n),
- the loading space (27a..27d) and the articles (23a..23n) located in the area of the loading space (27a..27d) are detected by a sensor system (8a..8e),
- after an article (23a..23n) has been picked up by the gripping unit (4) from or out of the first article carrier (9a, 9c, 9e, 10a, 16, 21), a check is carried out to determine whether an article (23a..23n) protrudes beyond said loading space (27a..27d), and
- the article (23a..23n) protruding beyond the loading space (27a..27d) is picked up by the gripping unit (4) and placed in another position if the outcome of said check is positive.

2. The method according to claim 1, **characterized in that** for placing an article (23a..23n) in or on the second loading aid (9b, 9d, 10b, 17a, 17b, 22), a position within the loading space (27a..27d) is calculated, at which the article (23a..23n) likely does not protrude beyond the loading space (27a..27d).

3. The method according to claim 1 or 2, **characterized in that** the loading aid (9a..9e) used comprises a container bottom (24), side walls (25) projecting therefrom and a loading opening (26) delimited by the side walls (25), and the loading space (27a) is delimited at the top by the loading opening (26).

4. The method according to claim 1 or 2, **characterized in that** the loading aid (9a..9e) used comprises a container bottom (24), side walls (25) projecting therefrom and a loading opening (26) delimited by the side walls (25), and the loading space (27b) projects upwards beyond the mentioned loading opening (26).

5. The method according to claim 4, **characterized in that** the loading space (27c) projects laterally beyond the side walls (25) of the loading aid (9a..9e) used.

6. The method according to claim 5, **characterized in that** the loading space (27d) extends downwards below the plane (28) of the loading opening (26) in the section projecting beyond the side walls (25).

7. The method according to one of claims 1 to 6, **characterized in that** it is checked whether an article (23a..23n) dropped from the gripping unit is completely outside the loading space (27a..27d).

8. The method according to claim 7, **characterized in that**
- it is checked whether the article (23a..23n) dropped from the gripping unit (4) is located on a rest surface (29a, 29b) which is arranged to be adjacent to the first article carrier (9a, 9c, 9e, 10a, 16, 21) and/or the second article carrier (9b, 9d, 10b, 17a, 17b, 22), and
- the article (23a..23n) located on the rest surface (29a, 29b) is picked up by the gripping unit (4) and is placed
i) in or on the first article carrier (9a, 9c, 9e, 10a, 16, 21), or
ii) in or on the second article carrier (9b, 9d, 10b, 17a, 17b, 22), or
iii) at a clearing place.

9. The method according to claim 7 or 8, **characterized in that** it is checked whether the article (23a..23n) dropped from the gripping unit (4) has dropped on the floor.

10. The method according to one of claims 1 to 9, **characterized in that** the check whether an article (23a..23n) protrudes beyond the loading space (27a..27d) and the step of picking up the article (23a..23n) protruding beyond the loading space (27a..27d) by the gripping unit (4) and placing it at another position, if the outcome of said check is positive, is repeated recursively until the outcome of the check is negative.

11. The method according to one of claims 1 to 9, **characterized in that** the check whether an article (23a..23n) protrudes beyond the loading space (27a..27d) and the step of picking up the article (23a..23n) protruding beyond the loading space (27a..27d) by the gripping unit (4) and placing it at another position, if the outcome of said check is positive, is repeated recursively and the recursive repetition of this procedure is canceled after a predefined number of repetitions, and an alarm message is issued.

12. The method according to one of claims 1 to 11, **characterized in that**
- picking up an article (23a..23n) from or out of the first article carrier (9a, 9c, 9e, 10a, 16, 21) and detecting the second article carrier (9b, 9d, 10b, 17a, 17b, 22) and the articles (23a..23n) located in or on the second article carrier (9b, 9d, 10b, 17a, 17b, 22) by the sensor system (8a..8e), and
- placing an article (23a..23n) in or on the second article carrier (9b, 9d, 10b, 17a, 17b, 22) and detecting the first article carrier (9a, 9c, 9e, 10a, 16, 21) and the articles (23a..23n) located in or on the first article carrier (9a, 9c, 9e, 10a, 16, 21) by the sensor system (8a..8e)
take place alternately.

13. The method according to one of claims 1 to 12, **characterized in that** the check whether an article (23a..23n) protrudes beyond the loading space (27a..27d) takes place after another article (23a..23n) has been picked up from or out of the first article carrier (9a, 9c, 9e, 10a, 16, 21).

14. The method according to one of claims 1 to 13, **characterized in that** the first article carrier is configured as a first loading aid (9a, 9c, 9e) and the second article carrier is configured as a second loading aid (9b, 9d), wherein
- a loading space (27a..27d), which is intended for accommodating articles (23a..23n), is defined in the region of the first loading aid (9a, 9c, 9e), and a further loading space (27a..27d), which is intended for accommodating articles (23a..23n), is defined in the region of the second loading aid (9b, 9d),
- the loading spaces (27a..27d) and the articles (23a..23n) of the first loading aid (9a, 9c, 9e) and of the second loading aid (9b, 9d) located in the area of the loading spaces (27a..27d) are each detected by the sensor system (8a..8e),
- after an article (23a..23n) has been picked up by the gripping unit (4) from or out of the first loading aid (9a, 9c, 9e) and after the article (23a..23n) has been placed by the gripping unit (4) into or onto the second loading aid (9b, 9d), a check is carried out in each case to determine whether an article (23a..23n) protrudes beyond one of the loading spaces (27a..27d), and
- the article (23a..23n) protruding beyond the loading space (27a..27d) is picked up by the gripping unit (4) and placed in another position if the result of said check is positive.

15. The method according to one of claims 1 to 14, **characterized in that** the check whether an article (23a..23n) protrudes beyond the loading space (27a..27d) takes place after the gripping unit (4) and/or the article (23a..23n) picked up by the gripping unit (4) has been completely moved out of the loading space (27a..27d).

16. The method according to one of claims 1 to 15, **characterized in that** the check whether an article (23a..23n) protrudes beyond the loading space (27a..27d) is carried out after the gripping unit (4) and/or the article (23a..23n) picked up by the gripping unit (4) has been moved completely out of a detecting range of the sensor system (8a..8e).

17. The method according to one of claims 1 to 16, **characterized in that** the check whether an article (23a..23n) protrudes beyond the loading space (27a..27d) is carried out after the gripping unit (4) and the article (23a..23n) picked up by the gripping unit (4) have been moved completely sideways away from an article carrier (9a..9d, 10a, 10b, 16, 17a, 17b, 21, 22).

18. The method according to one of claims 1 to 17, **characterized in that** the check whether an article (23a..23n) protrudes beyond the mentioned loading space (27a..27d) is carried out after each picking up of an article (23a..23n).

19. The method according to one of claims 1 to 18, **characterized in that** the check whether an article (23a..23n) protrudes beyond the loading space (27a..27d) is carried out after each placing of an article (23a..23n) into or onto the second article carrier (9b, 9d, 10b, 17a, 17b, 22).

20. The method according to one of claims 1 to 18, **characterized in that** the check whether an article (23a..23n) protrudes beyond said loading space (27a..27d) is carried out after placing a plurality of articles (23a..23n) into or onto the second article carrier (9b, 9d, 10b, 17a, 17b, 22).

21. The method according to one of claims 1 to 20, **characterized in that** an occupied status of the gripping unit (4) is monitored after picking up an article (23a..23n) and the check whether an article (23a..23n) protrudes beyond the loading space (27a..27d) is carried out upon recognition of an unoccupied but activated gripping unit (4).

22. The method according to one of claims 1 to 21, **characterized in that**, according to an order, the articles (23a..23n)
- are transported to the robot (1a, 1b) by the first article carrier (9a, 9c, 9e, 10a, 16, 21),
- are transferred from or out of the first article carrier (9a, 9c, 9e, 10a, 16, 21) into or onto the second article carrier (9b, 9d, 10b, 17a, 17b, 22) by the robot (1a, 1b), and
- are transported away from the robot (1a, 1b) by the second article carrier (9b, 9d, 10b, 17a, 17b, 22).

23. A robot system (2a..2d), comprising
- a robot (1a, 1b) with a gripping unit (4) movable relative to a robot base (3) for picking up articles (23a..23n), wherein the robot (1a, 1b) is configured to pick up articles (23a.. 23n) with the gripping unit (4) from or out of a first article carrier (9a, 9c, 9e, 10a, 16, 21) and placing them into or onto a second article carrier (9b, 9d, 10b, 17a, 17b, 22), and wherein at least one of the article carriers is configured as a loading aid (9a..9e) suitable for transporting the articles (23a..23n),
- a sensor system (8a..8e) for detecting a loading space (27a..27d) of the at least one loading aid (9a..9e) which is intended for accommodating the articles (23a..23n) and which is located within the range of action of said robot (1a, 1b), and
- a controller (11) which is configured to check, after an article (23a..23n) has been picked up by the gripping unit (4) from or out of the first article carrier (9a, 9c, 9e, 10a, 16, 21), whether an article (23a..23n) protrudes beyond the loading space (27a..27d), and to instruct the robot (1a, 1b), if the result of the check is positive, to pick up the article (23a..23n) protruding beyond the loading space (27a..27d) and place it at another position.

24. The robot system (2a..2d) according to claim 23, **characterized in that** the sensor system (8a..8e) comprises a camera and/or a room depth sensor and/or a laser scanner and/or an ultrasonic sensor.

25. The robot system (2a..2d) according claim 23 or 24, **characterized in that** the gripping unit (4) is formed by at least one suction gripper (5).

26. The robot system (2a..2d) according to one of claims 23 to 25, **characterized in that** the robot (1a, 1b) is formed as a jointed-arm robot or a gantry robot.

27. A storage and order-picking system (12) for order-picking of articles (23a..23n) comprising a storage area (18) for storing articles (23a..23n) and a working area for picking / repacking articles (23a..23n) using a robot system (2a..2d), **characterized in that** said robot system (2a..2d) is designed according to one of claims 23 to 26.

28. The storage and order-picking system (12) according to claim 27, **characterized in that** the working area is designed for the automated order-picking of articles (23a..23n), and a first conveying system for transporting articles (23a..23n) in or on first article carriers (9a, 9c, 9e, 10a, 16, 21) is arranged between the storage area (18) and the robot (1a, 1b) in the working area, and/or a second conveying system for transporting articles (23a..23n) in or on second article carriers (9b, 9d, 10b, 17a, 17b, 22) is provided between the storage area (18) and the robot (1a, 1b) in the working area, wherein the robot (1a, 1b) is designed for picking up at least one article (23a..23n) from or out of the first article carrier (9a, 9c, 9e, 10a, 16, 21) for an order and for placing the at least one article (23a..23n) in or on the second article carrier (9b, 9d, 10b, 17a, 17b, 22) for this order.

## Revendications

1. Procédé de contrôle d'un robot (1a, 1b) dans un système d'entreposage et de préparation de commandes (12) qui comprend une unité de préhension (4) mobile par rapport à la base du robot (3), dans lequel les articles (23a..23n) sont pris en charge avec l'unité de préhension (4) à partir ou hors d'un premier support d'article (9a, 9c, 9e, 10a, 16, 21) et déposés dans ou sur un deuxième support d'article (9b, 9d, 10b, 17a, 17b, 22), dans lequel
- au moins un des supports d'articles est conçu comme un moyen auxiliaire de chargement (9a..9e) adapté au transport des articles (23a..23n),
- au niveau de l'au moins un moyen auxiliaire de chargement (9a..9e), est défini un espace de chargement (27a..27d) qui permet de loger les articles (23a..23n),
- l'espace de chargement (27a..27d) et les articles (23a..23n) se trouvant au niveau de l'espace de chargement (27a..27d) sont détectés à l'aide d'un système de capteurs (8a..8e),
- après la prise en charge d'un article (23a..23n) par l'unité de préhension (4) à partir ou hors du premier support d'article (9a, 9c, 9e, 10a, 16, 21), a lieu une vérification afin de déterminer si un article (23a..23n) dépasse dudit espace de chargement (27a..27d) et
- l'article (23a..23n) dépassant de l'espace de chargement (27a..27d) est pris en charge par l'unité de préhension (4) et est déposé à une autre position lorsque le résultat de ladite vérification est positif.

2. Procédé selon la revendication 1, **caractérisé en ce que**, pour le dépôt d'un article (23a..23n) dans ou sur le deuxième support d'article (9b, 9d, 10b, 17a, 17b, 22), une position dans l'espace de chargement (27a..27d) est calculée, à laquelle ledit article (23a..23n) ne dépassera probablement pas dudit espace de chargement (27a..27d).

3. Procédé selon la revendication 1 ou 2, **caractérisé en ce que** le moyen auxiliaire de chargement (9a..9e) utilisé comprend un fond de récipient (24), des parois latérales (25) s'élevant à partir de celui-ci et une ouverture de chargement (26) délimitée par les parois latérales (25) et l'espace de chargement (27a) est délimité par l'ouverture de chargement (26) vers le haut.

4. Procédé selon la revendication 1 ou 2, **caractérisé en ce que** le moyen auxiliaire de chargement (9a..9e) utilisé comprend un fond de récipient (24), des parois latérales (25) s'élevant à partir de celui-ci et une ouverture de chargement (26) délimitée par les parois latérales (25) et l'espace de chargement (27b) dépasse de ladite ouverture de chargement (26) vers le haut.

5. Procédé selon la revendication 4, **caractérisé en ce que** l'espace de chargement (27c) dépasse latéralement des parois latérales (25) du moyen auxiliaire de chargement (9a..9e).

6. Procédé selon la revendication 5, **caractérisé en ce que** l'espace de chargement (27d) s'étend dans la portion dépassant des parois latérales (25) vers le bas sous le plan (28) de l'ouverture de chargement (26).

7. Procédé selon l'une des revendications 1 à 6, **caractérisé en ce qu'**il est vérifié si un article (23a..23n) tombé de l'unité de préhension se trouve entièrement à l'extérieur de l'espace de chargement (27a..27d).

8. Procédé selon la revendication 7, **caractérisé en ce que**
- il est vérifié si l'article (23a..23n) tombé de l'unité de préhension (4) se trouve sur une surface de dépose (29a, 29b) qui est voisine du premier support d'article (9a, 9c, 9e, 10a, 16, 21) et/ou du deuxième support d'article (9b, 9d, 10b, 17a, 17b, 22) et
- l'article (23a..23n) se trouvant sur la surface de dépose (29a, 29b) est pris en charge par l'unité de préhension (4) et est déposé
i) dans ou sur le premier support d'article (9a, 9c, 9e, 10a, 16, 21) ou
ii) dans ou sur le deuxième support d'article (9b, 9d, 10b, 17a, 17b, 22) ou
iii) sur un emplacement de clarification.

9. Procédé selon la revendication 7 ou 8, **caractérisé en ce qu'**il est vérifié si l'article (23a..23n) tombé de l'unité de préhension (4) est tombé sur le sol.

10. Procédé selon l'une des revendications 1 à 9, **caractérisé en ce que** la vérification si un article (23a..23n) dépasse de l'espace de chargement (27a..27d) et l'étape de prise en charge de l'article (23a..23n) dépassant de l'espace de chargement (27a..27d) par l'unité de préhension (4) et de dépôt à une autre position lorsque le résultat de ladite vérification est positif sont répétées de manière récursive jusqu'à ce que le résultat de ladite vérification soit négatif.

11. Procédé selon l'une des revendications 1 à 9, **caractérisé en ce que** la vérification si un article (23a..23n) dépasse de l'espace de chargement (27a..27d) et l'étape de prise en charge de l'article (23a..23n) dépassant de l'espace de chargement (27a..27d) par l'unité de préhension (4) et de dépôt à une autre position lorsque le résultat de ladite vérification est positif sont répétées de manière récursive et la répétition récursive de ce processus est interrompue après un nombre prédéterminé de répétitions et un message d'alerte est généré.

12. Procédé selon l'une des revendications 1 à 11, **caractérisé en ce que**
- la prise en charge d'un article (23a..23n) à partir ou hors du premier support d'article (9a, 9c, 9e, 10a, 16, 21) et une détection du deuxième support d'article (9b, 9d, 10b, 17a, 17b, 22) et de l'article (23a..23n) se trouvant dans ou sur le deuxième support d'article (9b, 9d, 10b, 17a, 17b, 22) à l'aide du système de capteurs (8a..8e) et
- la dépose d'un article (23a..23n) dans ou sur le deuxième support d'article (9b, 9d, 10b, 17a, 17b, 22) et une détection du premier support d'article (9a, 9c, 9e, 10a, 16, 21) et de l'article (23a..23n) se trouvant dans ou sur le premier support d'article (9a, 9c, 9e, 10a, 16, 21) à l'aide du système de capteurs (8a..8e) ont lieu alternativement.

13. Procédé selon l'une des revendications 1 à 12, **caractérisé en ce que** la vérification si un article (23a..23n) dépasse de l'espace de chargement (27a..27d) a lieu après la prise en charge d'un autre article (23a..23n) à partir ou hors du premier support d'article (9a, 9c, 9e, 10a, 16, 21).

14. Procédé selon l'une des revendications 1 à 13, **caractérisé en ce que** le premier support d'article est conçu comme un premier moyen auxiliaire de chargement (9a, 9c, 9e) et le deuxième support d'article est conçu comme un deuxième moyen auxiliaire de chargement (9b, 9d), dans lequel
- au niveau du premier moyen auxiliaire de chargement (9a, 9c, 9e), est défini un espace de chargement (27a..27d) qui permet de loger des articles (23a..23n) et, au niveau du deuxième moyen auxiliaire de chargement (9b, 9d), est défini un autre espace de chargement (27a..27d) qui permet de loger des articles (23a..23n),
- les espaces de chargement (27a..27d) et les articles (23a..23n), se trouvant au niveau des espaces de chargement (27a..27d), du premier moyen auxiliaire de chargement (9a, 9c, 9e) et du deuxième moyen auxiliaire de chargement (9b, 9d) sont détectés respectivement à l'aide du système de capteurs (8a..8e),
- après la prise en charge d'un article (23a..23n) par l'unité de préhension (4) à partir ou hors du premier moyen auxiliaire de chargement (9a, 9c, 9e) et après la dépose de l'article (23a..23n) par l'unité de préhension (4) dans ou sur le deuxième moyen auxiliaire de chargement (9b, 9d), a lieu respectivement une vérification si un article (23a..23n) dépasse d'un des espaces de chargement (27a..27d) et
- l'article (23a..23n) dépassant hors dudit espace de chargement (27a..27d) est pris en charge par l'unité de préhension (4) et déposé à une autre position lorsque le résultat de ladite vérification est positif.

15. Procédé selon l'une des revendications 1 à 14, **caractérisé en ce que** la vérification si un article (23a..23n) dépasse de l'espace de chargement (27a..27d) a lieu après le déplacement complet de l'unité de préhension (4) et/ou de l'article (23a..23n) pris en charge par l'unité de préhension (4) hors de l'espace de chargement (27a..27d).

16. Procédé selon l'une des revendications 1 à 15, **caractérisé en ce que** la vérification si un article (23a..23n) dépasse de l'espace de chargement (27a..27d) a lieu après le déplacement complet de l'unité de préhension (4) et/ou de l'article (23a..23n) pris en charge par l'unité de préhension (4) hors d'une zone de détection du système de capteurs (8a..8e).

17. Procédé selon l'une des revendications 1 à 16, **caractérisé en ce que** la vérification si un article (23a..23n) dépasse de l'espace de chargement (27a..27d) a lieu après l'éloignement latéral complet de l'unité de préhension (4) et/ou de l'article (23a..23n) pris en charge par l'unité de préhension (4) d'un support d'article (9a..9d, 10a, 10b, 16, 17a, 17b, 21, 22).

18. Procédé selon l'une des revendications 1 à 17, **caractérisé en ce que** la vérification si un article (23a..23n) dépasse dudit espace de chargement (27a..27d) est effectuée après chaque prise en charge d'un article (23a..23n).

19. Procédé selon l'une des revendications 1 à 18, **caractérisé en ce que** la vérification si un article (23a..23n) dépasse dudit espace de chargement (27a..27d) est effectuée après chaque dépose d'un article (23a..23n) dans ou sur le deuxième support d'article (9b, 9d, 10b, 17a, 17b, 22).

20. Procédé selon l'une des revendications 1 à 18, **caractérisé en ce que** la vérification si un article (23a..23n) dépasse dudit espace de chargement (27a..27d) est effectuée après la dépose d'une pluralité d'articles (23a..23n) dans ou sur le deuxième support d'article (9b, 9d, 10b, 17a, 17b, 22).

21. Procédé selon l'une des revendications 1 à 20, **caractérisé en ce qu'**un statut d'occupation de l'unité de préhension (4) après la prise en charge d'un article (23a..23n) est surveillé et la vérification si un article (23a..23n) dépasse de l'espace de chargement (27a..27d) est effectuée lors de la détection d'une unité de préhension (4) inoccupée mais activée.

22. Procédé selon l'une des revendications 1 à 21, **caractérisé en ce que** les articles (23a..23n) sont, selon la commande,
- transportés à l'aide du premier support d'article (9a, 9c, 9e, 10a, 16, 21) vers le robot (1a, 1b),
- transférés à l'aide du robot (1a, 1b) à partir ou hors du premier support d'article (9a, 9c, 9e, 10a, 16, 21) dans ou sur le deuxième support d'article (9b, 9d, 10b, 17a, 17b, 22) et
- transportés loin du robot (1a, 1b) à l'aide du deuxième support d'article (9b, 9d, 10b, 17a, 17b, 22).

23. Système de robot (2a..2d) comprenant
- un robot (1a, 1b) avec une unité de préhension (4) mobile par rapport à une base de robot (3), pour la prise en charge d'articles (23a..23n), dans lequel le robot (1a, 1b) est conçu pour prendre en charge des articles (23a..23n) avec l'unité de préhension (4) à partir ou hors d'un premier support d'article (9a, 9c, 9e, 10a, 16, 21) et pour les déposer dans ou sur un deuxième support d'article (9b, 9d, 10b, 17a, 17b, 22) et dans lequel au moins un des supports d'articles est conçu comme un moyen auxiliaire de chargement (9a..9e) adapté au transport des articles (23a..23n),
- un système de capteurs (8a..8e) pour la détection d'un espace de chargement (27a..27d) de l'au moins un moyen auxiliaire de chargement (9a..9e), qui permet de loger les articles (23a..23n) et qui se trouve dans la zone d'action dudit robot (1a, 1b) et
- une commande (11) qui est conçue pour vérifier, après la prise en charge d'un article (23a..23n) par l'unité de préhension (4) à partir ou hors du premier support d'article (9a, 9c, 9e, 10a, 16, 21), si un article (23a..23n) dépasse dudit espace de chargement (27a..27d) et pour ordonner au robot (1a, 1b), si le résultat est positif, de prendre en charge l'article (23a..23n) dépassant de l'espace de chargement (27a..27d) et pour le déposer à une autre position.

24. Système de robot (2a..2d) selon la revendication 23, **caractérisé en ce que** le système de capteurs (8a..8e) comprend une caméra et/ou un capteur de profondeur et/ou un scanner laser et/ou un capteur à ultrasons.

25. Système de robot (2a..2d) selon la revendication 23 ou 24, **caractérisé en ce que** l'unité de préhension (4) est constituée d'un préhenseur à ventouse (5).

26. Système de robot (2a..2d) selon l'une des revendications 23 à 25, **caractérisé en ce que** le robot (1a, 1b) est conçu comme un robot à bras articulé ou un robot à portique.

27. Système de stockage et de préparation de commandes (12) pour la préparation de commandes d'articles (23a..23n), comprenant une zone de stockage (18) pour le stockage d'articles (23a..23n) et un poste de travail pour la préparation de commandes / déballage d'articles (23a..23n) avec un système de robot (2a..2d), **caractérisé en ce que** ledit système de robot (2a..2d) est conçu selon l'une des revendications 23 à 26.

28. Système de stockage et de préparation de commandes (12) selon la revendication 27, **caractérisé en ce que** le poste de travail est conçu pour la préparation de commandes entièrement automatisée d'articles (23a..23n) et un premier dispositif de convoyage pour le transport d'articles (23a..23n) dans ou sur des premiers supports d'articles (9a, 9c, 9e, 10a, 16, 21) est disposé entre la zone de stockage (18) et le robot (1a, 1b) sur le poste de travail et/ou un deuxième dispositif de convoyage pour l'évacuation des articles (23a..23n) dans ou sur des deuxièmes supports d'articles (9b, 9d, 10b, 17a, 17b, 22) est prévu entre la zone de stockage (18) et le robot (1a, 1b) sur le poste de travail, dans lequel le robot (1a, 1b) est conçu pour prendre en charge au moins un article (23a..23n) à partir ou hors du premier support d'article (9a, 9c, 9e, 10a, 16, 21) correspondant à une commande et pour déposer l'au moins un article (23a..23n) dans ou sur le deuxième support d'article (9b, 9d, 10b, 17a, 17b, 22) correspondant à cette commande.
